# EUROPEAN PATENT APPLICATION

(11) **EP 4 844 556 A1**
(43) Date of publication of application: **25.11.2026**
(21) Application number: 25844831.5
(22) Date of filing: 11.04.2025
(51) Int. Cl.: G06F 3/0488, G06F 3/0486, G06F 3/041, G06F 3/0485, G01P 15/14, G06F 3/04812

(54) **ELECTRONIC DEVICE AND CONTROL METHOD THEREOF**

(30) Priority: 26.07.2024 KR 20240099574
(71) Applicant: Samsung Electronics Co., Ltd., Suwon-si, Gyeonggi-do 16677 (KR)
(72) Inventor: LEE, Sangyoon, Suwon-si Gyeonggi-do 16677 (KR); SON, Sunmin, Suwon-si Gyeonggi-do 16677 (KR); JUNG, Jingun, Suwon-si Gyeonggi-do 16677 (KR); KIM, Yoonyoung, Suwon-si Gyeonggi-do 16677 (KR); MOON, Joosun, Suwon-si Gyeonggi-do 16677 (KR); YUN, Soyoung, Suwon-si Gyeonggi-do 16677 (KR); CHO, Eunjoo, Suwon-si Gyeonggi-do 16677 (KR); CHOI, Gippeum, Suwon-si Gyeonggi-do 16677 (KR)
(74) Representative: Appleyard Lees IP LLP
(86) International application number: PCT/KR2025/004962
(87) International publication number: WO 2026/023794

(57) **Abstract**

An electronic apparatus may include: memory that stores instructions; a communication interface configured to connect with a terminal device; a display; and at least one processor including processing circuitry, wherein the instructions, when executed individually or collectively by the at least one processor, cause the electronic apparatus to: control the display to display a screen including a plurality of objects and a pointer user interface (Ul); receive, via the communication interface, touch data from the terminal device operating in a first mode or motion data from the terminal device operating in a second mode; based on the touch data being received, perform a function corresponding to the touch data; and based on the motion data being received, control the display to move the pointer UI based on the motion data, wherein the terminal device operates in the second mode based on a pre-set event.

## Description

### [Technical Field]

The disclosure relates to an electronic apparatus and a controlling method thereof. More specifically, the disclosure relates to an electronic apparatus that is controlled remotely according to commands received from an external device and a controlling method thereof.

### [Background Art]

A dedicated remote-control device for controlling an electronic apparatus including a display remotely may be used. A user may control the electronic apparatus through the remote-control device. However, there is a problem of not easily performing touch recognition if the remote-control device does not include the display.

If there is a terminal device (e.g., smartphone) that recognizes a touch of a user, a user input may be received using a touch method. The terminal device may transmit a touch signal corresponding to the user input to the electronic apparatus. The electronic apparatus may perform a function corresponding to the user input based on the touch signal. However, there is a problem of moving a pointer displayed on the electronic apparatus being difficult if only the touch method is used.

### [Disclosure]

### [Technical Solution]

One or more embodiments can improve the above-mentioned problems, and one or more embodiments of the disclosure can provide an electronic apparatus that receives motion data according to a pre-set event from a terminal device, and moves a pointer UI based on the received motion data and a controlling method thereof.

According to one or more examples embodiment, an electronic apparatus may include: memory that stores instructions; a communication interface configured to connect with a terminal device; a display; and at least one processor including processing circuitry, wherein the instructions, when executed individually or collectively by the at least one processor, cause the electronic apparatus to: control the display to display a screen including a plurality of objects and a pointer user interface (UI); receive, via the communication interface, touch data from the terminal device operating in a first mode or motion data from the terminal device operating in a second mode; based on the touch data being received, perform a function corresponding to the touch data; and based on the motion data being received, control the display to move the pointer UI based on the motion data, wherein the terminal device operates in the second mode based on a pre-set event.

The instructions, when executed individually or collectively by the at least one processor, may further cause the electronic apparatus to: receive a notification from the terminal device via the communication interface, the notification indicating that an application for controlling the electronic apparatus has been executed; and based on the notification being received, control the display to display the pointer UI.

The function corresponding to the touch data may include at least one of: moving the pointer UI, selecting an object corresponding to a position at which the pointer UI is displayed from the plurality of objects, displaying a home screen, displaying a previous screen, or scrolling a current screen.

The touch data may include at least one of: a drag signal, a tap signal a long tap signal, a double tap signal, or an edge scroll signal.

The pre-set event may include at least one of: a pre-set area of a display of the terminal device being touched, a floating UI displayed on the display of the terminal device being touched, an area of the display of the terminal device being touched for a threshold time or more, a pre-set physical button of the terminal device being touched, or a pre-set UI displayed on the display of the terminal device being touched.

The instructions, when executed individually or collectively by the at least one processor, may further cause the electronic apparatus to: based on receiving the touch data including a user input received through a first area of a display of the terminal device, perform a function corresponding to the touch data; and based on the motion data being received based on a user input received through a second area of the display of the terminal device, control the display for the pointer UI to move based on the motion data.

The instructions, when executed individually or collectively by the at least one processor, may further cause the electronic apparatus to: based on receiving the motion data obtained while a user input for selecting a floating UI displayed on the display of the terminal device is received, control the display for the pointer UI to move based on the motion data.

The motion data may include gyro data obtained through a gyroscope sensor in the terminal device or acceleration data obtained through an acceleration sensor in the terminal device.

The instructions, when executed individually or collectively by the at least one processor, may further cause the electronic apparatus to: adjust a moving speed of the pointer UI based on movement pattern information of the pointer UI stored in the memory. The movement pattern information of the pointer UI may include information indicating a pattern by which the pointer UI is moved to select an object.

The instructions, when executed individually or collectively by the at least one processor, may further cause the electronic apparatus to: control the display to display identification information corresponding to the terminal device together with the pointer UI.

According to one or more examples embodiment, a controlling method of an electronic apparatus connected with a terminal device, may include: displaying a screen including a plurality of objects and a pointer user interface (UI); receiving touch data from the terminal device operating in a first mode or motion data from the terminal device operating in a second mode; based on the touch data being received, performing a function corresponding to the touch data; and based on the motion data being received, controlling the pointer UI to move based on the motion data. The terminal device may operate in the second mode based on a pre-set event.

The method may further include: receiving a notification from the terminal device, the notification indicating that an application for controlling the electronic apparatus has been executed; and based on the notification being received, displaying the pointer UI.

The function corresponding to the touch data may include at least one of: moving the pointer UI, selecting an object corresponding to a position at which the pointer UI is displayed from the plurality of objects, displaying a home screen, displaying a previous screen, or scrolling a current screen.

The touch data may include at least one of a drag signal, a tap signal a long tap signal, a double tap signal, or an edge scroll signal.

The pre-set event may include at least one of: a pre-set area of a display of the terminal device being touched, a floating UI displayed on the display of the terminal device being touched, an area of the display of the terminal device being touched for a threshold time or more, a pre-set physical button of the terminal device being touched, or a pre-set UI displayed on the display of the terminal device being touched.

The method may further include: based on receiving the touch data including a user input received through a first area of a display of the terminal device, performing a function corresponding to the touch data; and based on the motion data being received based on a user input received through a second area of the display of the terminal device, controlling the pointer UI to move based on the motion data.

The method may further include: based on receiving the motion data obtained while a user input for selecting a floating UI displayed on the display of the terminal device is received, controlling the pointer UI to move based on the motion data.

The motion data may include gyro data obtained through a gyroscope sensor in the terminal device or acceleration data obtained through an acceleration sensor in the terminal device.

The method may further include: adjusting a moving speed of the pointer UI based on movement pattern information of the pointer UI. The movement pattern information of the pointer UI may include information indicating a pattern by which the pointer UI is moved to select an object.

The method may further include: displaying identification information corresponding to the terminal device together with the pointer UI.
one or more embodimentsone or more embodiments[Description of Drawings]

Embodiments will be more clearly understood from the following detailed description taken in conjunction with the accompanying drawings in which:
FIG. 1 is a diagram illustrating an operation for controlling an electronic apparatus through a terminal device according to one or more embodiments;
FIG. 2 is a block diagram illustrating an electronic apparatus according to one or more embodiments;
FIG. 3 is a block diagram illustrating a detailed configuration of the electronic apparatus of FIG. 2 according to one or more embodiments;
FIG. 4 is a diagram illustrating an operation for displaying a pointer UI in an electronic apparatus according to one or more embodiments;
FIG. 5 is a diagram illustrating an operation for displaying a pointer UI in an electronic apparatus according to one or more embodiments;
FIG. 6 is a diagram illustrating an operation for displaying a pointer UI in an electronic apparatus according to one or more embodiments;
FIG. 7 is a diagram illustrating an operation for controlling an electronic apparatus through a terminal device according to one or more embodiments;
FIG. 8 is a diagram illustrating an operation for displaying a pointer UI in an electronic apparatus according to one or more embodiments;
FIG. 9 is a diagram illustrating an operation for displaying a pointer UI after a pre-set event is identified according to one or more embodiments;
FIG. 10 is a diagram illustrating an operation in which an electronic apparatus and a terminal device are connected according to one or more embodiments;
FIG. 11 is a diagram illustrating an operation in which a pre-registered electronic apparatus and a terminal device are connected according to one or more embodiments;
FIG. 12 is a diagram illustrating a touch input table according to one or more embodiments;
FIG. 13 is a diagram illustrating an operation in which an electronic apparatus performs a function corresponding to touch data according to one or more embodiments;
FIG. 14 is a diagram illustrating an operation in which a terminal device identifies a function corresponding to touch data according to one or more embodiments;
FIG. 15 is a diagram illustrating an operation for moving a pointer UI based on touch data according to one or more embodiments;
FIG. 16 is a diagram illustrating an operation for moving a pointer UI based on touch data according to one or more embodiments;
FIG. 17 is a diagram illustrating an operation for moving a pointer UI by touching a pre-set area according to one or more embodiments;
FIG. 18 is a diagram illustrating an operation for moving a pointer UI by touching a pre-set area according to one or more embodiments;
FIG. 19 is a diagram illustrating an operation for processing touch data and an operation for processing motion data according to one or more embodiments;
FIG. 20 is a diagram illustrating a floating UI according to one or more embodiments;
FIG. 21 is a diagram illustrating an operation for controlling a pointer UI displayed in an electronic apparatus through a floating UI according to one or more embodiments;
FIG. 22 is a diagram illustrating an operation for displaying a pointer UI based on a touch recognized for a pre-set time according to one or more embodiments;
FIG. 23 is a diagram illustrating an operation for displaying a pointer UI based on a touch recognized for a pre-set time according to one or more embodiments;
FIG. 24 is a diagram illustrating an operation for moving a pointer UI by using a physical button of a terminal device according to one or more embodiments;
FIG. 25 is a diagram illustrating an operation for moving a pointer UI by using a physical button of a terminal device according to one or more embodiments;
FIG. 26 is a diagram illustrating an operation for moving a pointer UI by identifying a pre-set event according to one or more embodiments;
FIG. 27 is a diagram illustrating an operation for moving a pointer UI by identifying a pre-set event according to one or more embodiments;
FIG. 28 is a diagram illustrating a mode of a terminal device according to one or more embodiments;
FIG. 29 is a diagram illustrating a movable state of a floating UI according to one or more embodiments;
FIG. 30 is a diagram illustrating an operation for displaying a pointer UI corresponding to an area of a terminal device that a user touches according to one or more embodiments;
FIG. 31 is a diagram illustrating a user pattern for moving a pointer UI according to one or more embodiments;
FIG. 32 is a diagram illustrating a user pattern for moving a pointer UI according to one or more embodiments;
FIG. 33 is a diagram illustrating an operation for changing a moving speed of a pointer UI based on an object number according to one or more embodiments;
FIG. 34 is a diagram illustrating an operation for controlling a moving speed of a pointer UI based on a distance between an electronic apparatus and a terminal device according to one or more embodiments;
FIG. 35 is a diagram illustrating a grab method of a user according to one or more embodiments;
FIG. 36 is a diagram illustrating an operation for changing a position of a floating UI according to one or more embodiments;
FIG. 37 is a diagram illustrating one or more embodiments of a terminal device and a remote-control device being recognized simultaneously in an electronic apparatus according to one or more embodiments;
FIG. 38 is a diagram illustrating one or more embodiments of a plurality of terminal devices being simultaneously recognized in an electronic apparatus according to one or more embodiments;
FIG. 39 is a diagram illustrating one or more embodiments of a plurality of terminal devices being simultaneously recognized in an electronic apparatus according to one or more embodiments;
FIG. 40 is a diagram illustrating an operation for displaying a pointer UI differently based on a terminal device according to one or more embodiments;
FIG. 41 is a diagram illustrating an operation in which an electronic apparatus receives touch data and motion data from a terminal device; and
FIG. 42 is a diagram illustrating a controlling method of an electronic apparatus according to one or more embodiments.

### [Mode for Invention]

The disclosure will be described in detail below with reference to the accompanying drawings.

Terms used in describing the embodiments of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the corresponding description. Accordingly, the terms used herein are not to be understood simply as its designation but based on the meaning of the term and the overall context of the disclosure.

In the disclosure, expressions such as "have", "may have", "include", and "may include" are used to designate a presence of a corresponding characteristic (e.g., elements such as numerical value, function, operation, or component), and not to preclude a presence or a possibility of additional characteristics.

The expression at least one of A and/or B is to be understood as indicating any one of "A" or "B" or "A and B".

Expressions such as "1st", "2nd", "first" or "second" used in the disclosure may limit various elements regardless of order and/or importance, and may be used merely to distinguish one element from another element and not limit the relevant element.

When a certain element (e.g., a first element) is indicated as being "(operatively or communicatively) coupled with/to" or "connected to" another element (e.g., a second element), it may be understood as the certain element being directly coupled with/to the another element or as being coupled through other element (e.g., a third element).

A singular expression includes a plural expression, unless otherwise specified. It is to be understood that the terms such as "form" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

The term "module" or "part" used in one or more embodiments herein perform at least one function or operation, and may be implemented with a hardware or software, or implemented with a combination of hardware and software. In addition, a plurality of "modules" or a plurality of "parts", except for a "module" or a "part" which needs to be implemented with a specific hardware, may be integrated in at least one module and implemented as at least one processor.

In the disclosure, the term "user" may refer to a person using an electronic apparatus or an apparatus (e.g., artificial intelligence electronic apparatus) using an electronic apparatus.

The disclosure will be described in greater detail below with reference to the accompanied drawings.

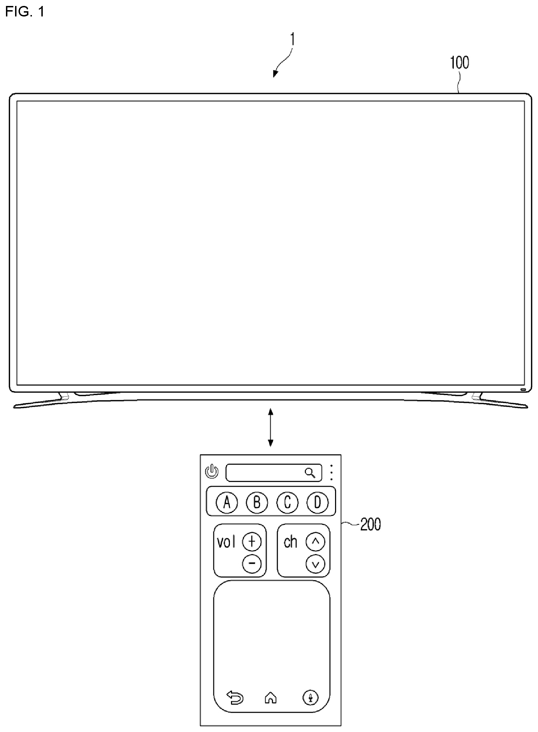

FIG. 1 is a diagram illustrating an operation for controlling an electronic apparatus 100 through a terminal device 200 according to one or more embodiments.

Referring to FIG. 1, the electronic apparatus 100 and the terminal device 200 may be connected with each other.

The electronic apparatus 100 may include various devices that include a display. The electronic apparatus 100 may be an electric blackboard, a television (TV), a desktop personal computer (PC), a notebook, a smartphone, a tablet PC, a server, and the like. The above-described examples are merely examples for describing the electronic apparatus and is not necessarily limited to the above-mentioned devices.

The electronic apparatus 100 may be an apparatus that includes a display. The electronic apparatus 100 may be an apparatus that outputs content that includes images. The electronic apparatus 100 may be described as a display apparatus, a display device, and the like. For example, the electronic apparatus 100 may be a TV, a smart TV, and the like.

The terminal device 200 may be a device that controls the electronic apparatus 100 remotely. The terminal device 200 may be described as a remote-control device.

According to one or more embodiments, the terminal device 200 may be a device including a display. The disclosure will be described based on the terminal device 200 that includes a display. The terminal device 200 may be described as a user apparatus, a wearable device, or the like. For example, the terminal device 200 may be described as a smartphone, a smart watch, and the like.

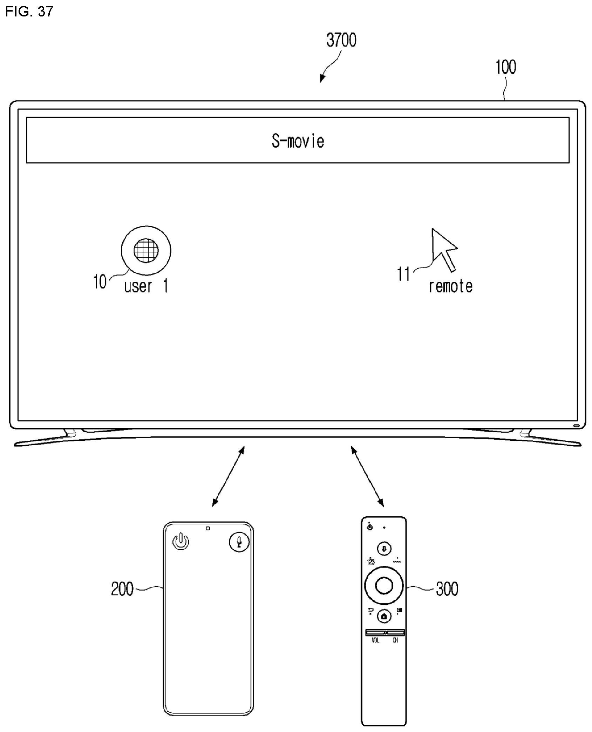

According to one or more embodiments, the terminal device 200 may be a device that does not include a display. The terminal device 200 may be a remote-control device that controls the electronic apparatus 100. The terminal device 200 may be a dedicated remote-control device of the electronic apparatus 100. One or more embodiments associated with the dedicated remote-control device will be described in FIG. 37.

A method by which the electronic apparatus 100 and the terminal device 200 communicate with each other may be varied.

In one or more examples, the electronic apparatus 100 and the terminal device 200 may communicate using a Bluetooth communication method. The Bluetooth communication method may include a low energy Bluetooth communication method.

In one or more examples, the electronic apparatus 100 and the terminal device 200 may communicate using an infrared communication method.

In one or more examples, the electronic apparatus 100 and the terminal device 200 may communicate using a Wi-Fi communication method.

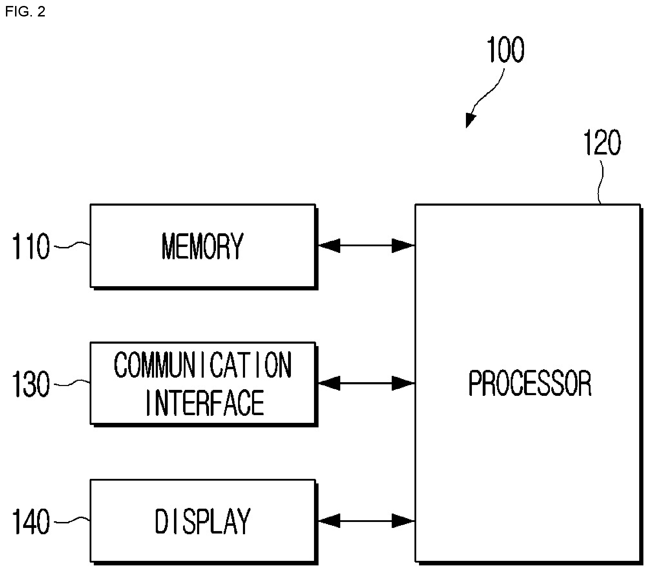

FIG. 2 is a block diagram illustrating the electronic apparatus 100 according to one or more embodiments.

Referring to FIG. 2, the electronic apparatus 100 may include a memory 110 storing instructions, a communication interface 130 connected with the terminal device 200, a display 140, and at least one processor 120 including processing circuitry.

The at least one processor 120 may perform an overall control operation of the electronic apparatus 100. The at least one processor 120 may perform a function controlling the overall operation of the electronic apparatus 100.

The instructions may cause the electronic apparatus to perform the following operations when executed individually or collectively by the at least one processor.

The at least one processor 120 may control the display 140 to display a screen including a plurality of objects and a pointer user interface (UI) 10, perform, when touch data is received from the terminal device 200 that operates in a first mode to transmit the touch data, a function corresponding to the touch data, and control, when motion data is received from the terminal device 200 that operates in a second mode to transmit the motion data based on a pre-set event, the display 140 to move the pointer UI 10 based on the motion data. In one or more embodiments, the at least one processor 120 may receive, via the communication interface 130, touch data from the terminal device 200 that is operating in a first mode. In one or more embodiments, the at least one processor 120 may receive, via the communication interface 130, motion data from the terminal device 200 that is operating in a second mode.

The at least one processor 120 may display a screen including at least one object on the display 140. The at least one processor 120 may display a screen including at least one object together with the pointer UI 10 on the display 140.

The pointer UI 10 may be a user interface (UI) displayed to control the electronic apparatus 100 with the terminal device 200. The pointer UI 10 may be a UI for indicating a position corresponding to a user input. The pointer UI 10 may be a UI displayed to select at least one object displayed on the display 140. The pointer UI 10 may be described as a cursor UI, a movement UI, a selection UI, an indicator, and the like.

The at least one processor 120 may, based on a receiving a notification indicating that an application for controlling the electronic apparatus 100 has been executed from the terminal device 200, control the display 140 to display the pointer UI 10.

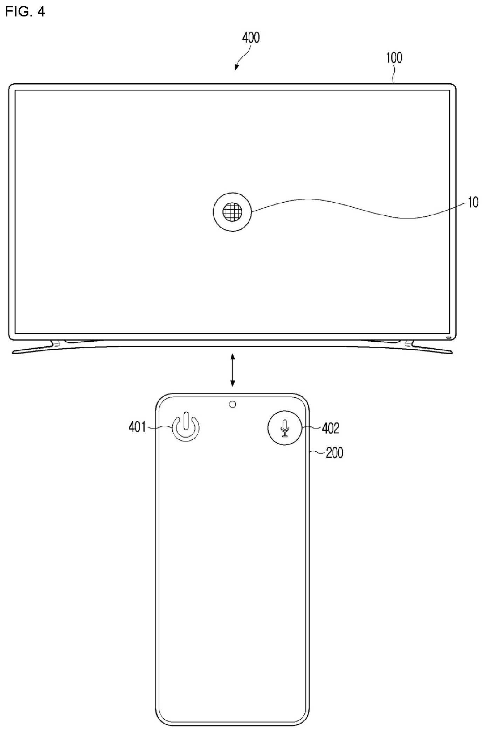

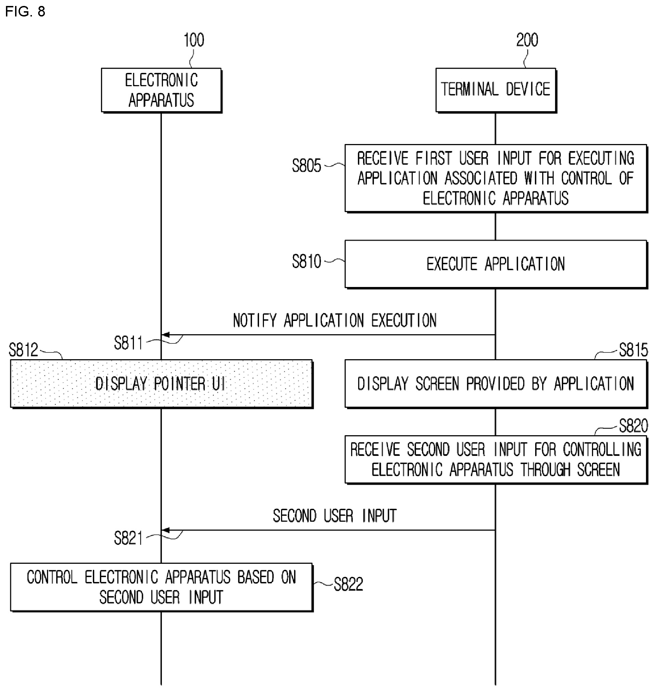

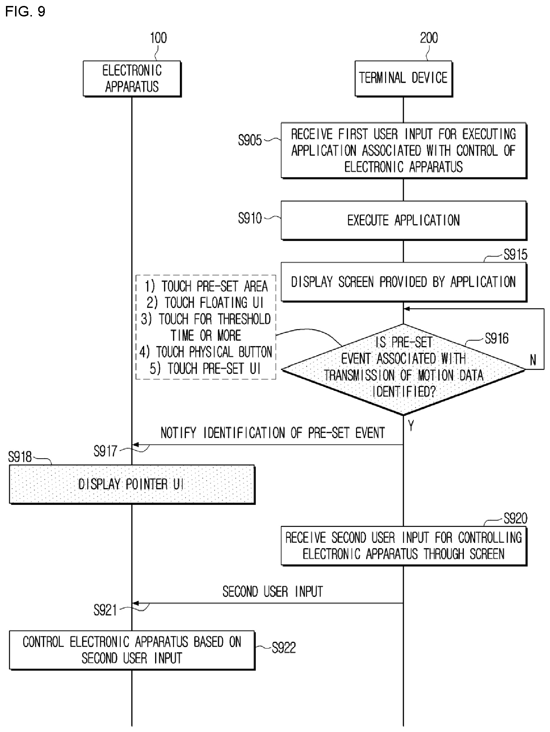

An operation for executing an application by the terminal device 200 will be described in FIG. 4 to FIG. 7. An operation for displaying the pointer UI 10 will be described in FIG. 8 and FIG. 9.

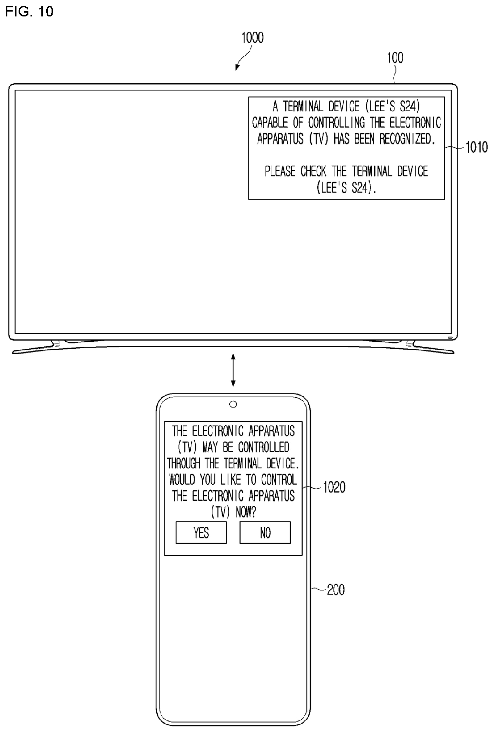

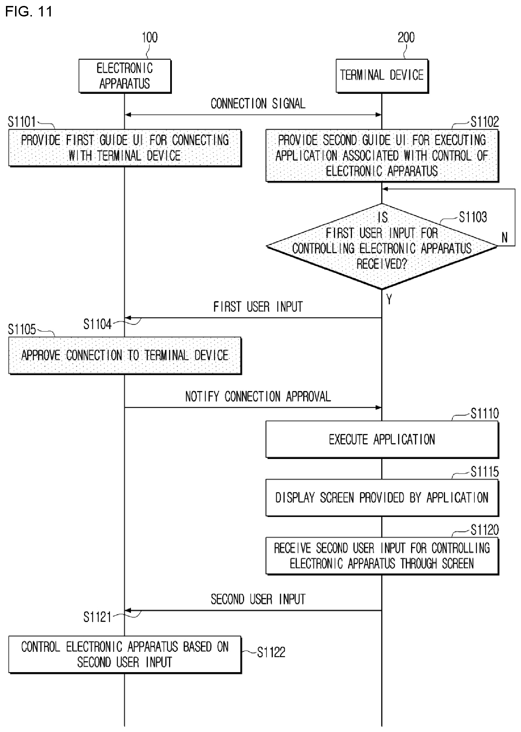

An operation for connecting the electronic apparatus 100 and the terminal device 200 will be described in FIG. 10 and FIG. 11.

The function corresponding to the touch data may include at least one of: moving the pointer UI 10, selecting an object corresponding to a position at which the pointer UI 10 is displayed of the plurality of objects, displaying a home screen, a function for displaying a previous screen, or scrolling a current screen.

In one or more examples, the touch data may include at least one of a drag signal, a tap signal a long tap signal, a double tap signal, or an edge scroll signal. The touch data may include information in which various signals corresponding to the user inputs are defined.

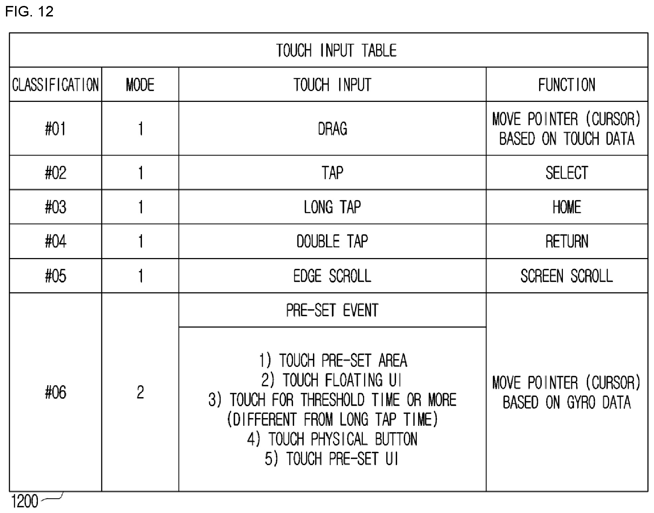

The at least one processor 120 may store a touch input table in the memory 110. The at least one processor 120 may perform a function corresponding to the touch data received based on the touch input table. Detailed descriptions associated therewith will be described in FIG. 12 to FIG. 14.

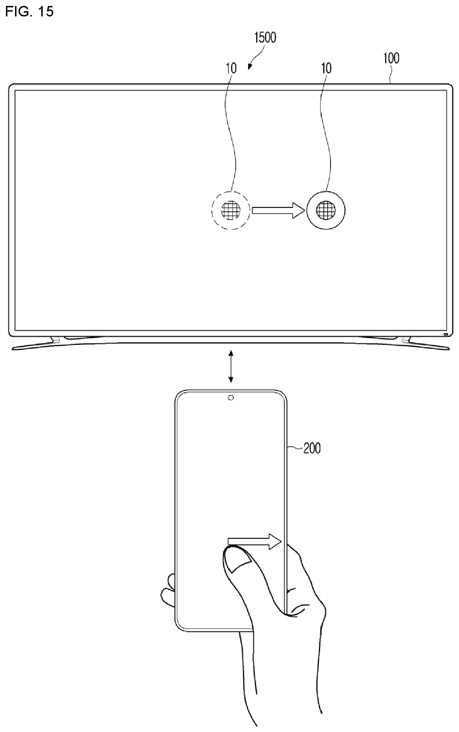

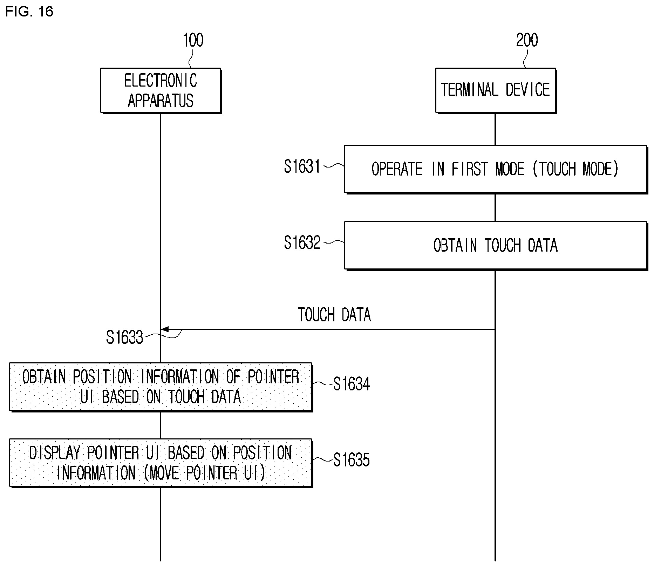

The at least one processor 120 may move the pointer UI 10 based on the touch data. The touch data may include the drag signal. The at least one processor 120 may move the pointer UI 10 based on the drag signal. Operations associated therewith will be described in FIG. 15 and FIG. 16.

The pre-set event may include at least one of a pre-set area being touched from among a whole area of the display 140 of the terminal device 200, a floating UI 20 displayed on the display 140 of the terminal device 200 being touched, a random area being touched for a threshold time or more from among the whole area of the display 140 of the terminal device 200, a pre-set physical button of the terminal device 200 being touched, or a pre-set UI displayed on the display 140 of the terminal device 200 being touched.

The expression 'being touched' may be described as the expression 'being selected'.

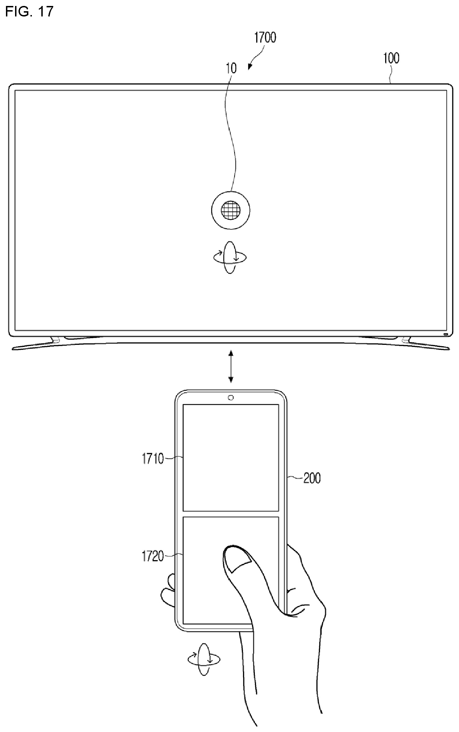

An operation for the event of the pre-set area being touched will be described in FIG. 17 to FIG. 19.

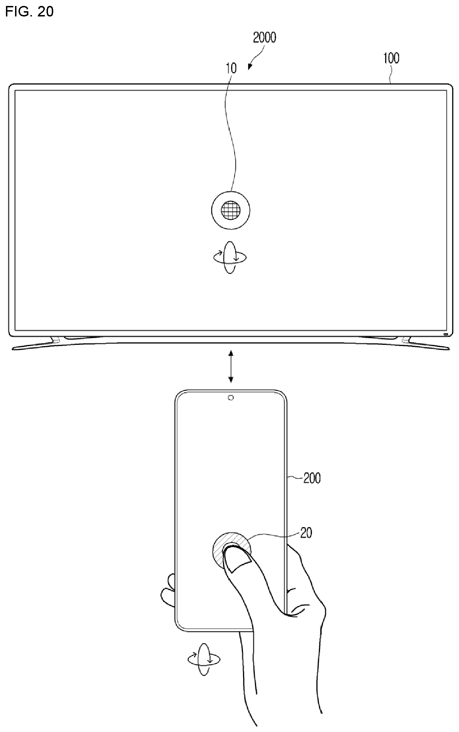

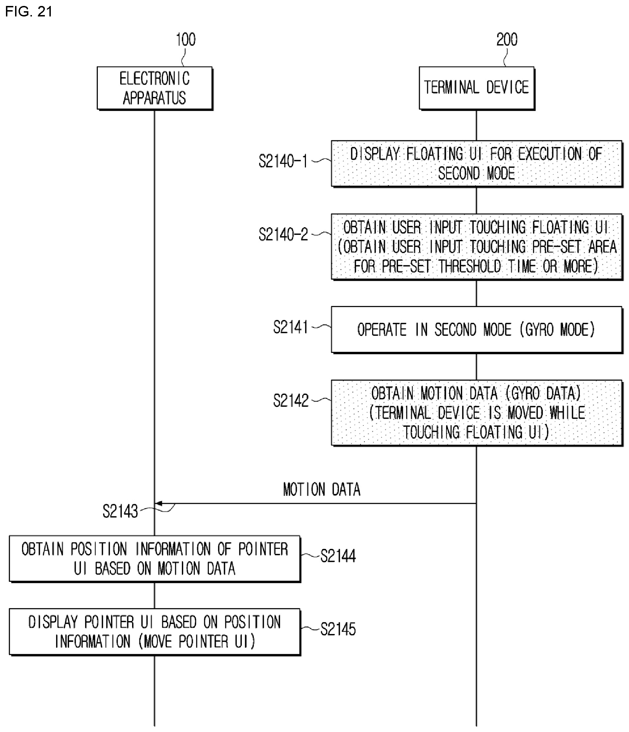

An operation for the event of the floating UI 20 being touched will be described in FIG. 20 and FIG. 21.

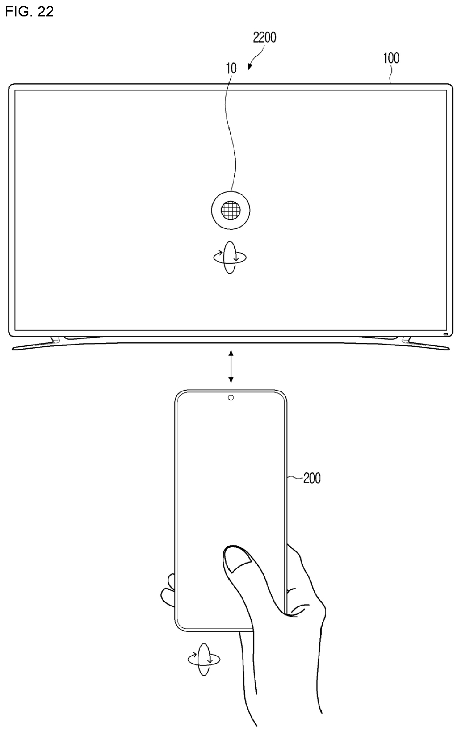

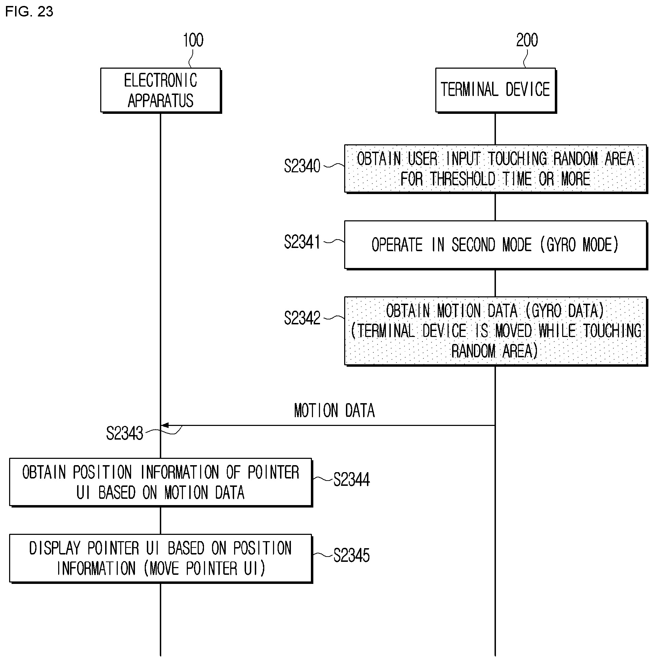

The event of a random area being touched for a threshold time or more will be described in FIG. 22 and FIG. 23.

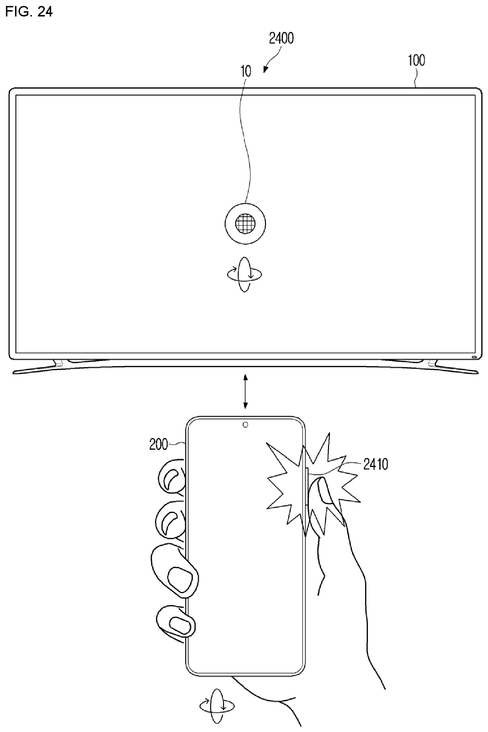

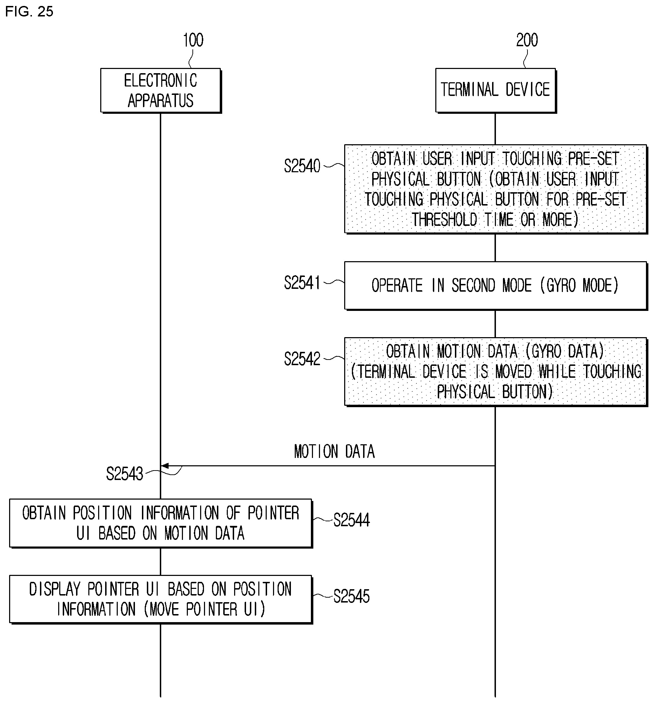

The event of the pre-set physical button being touched will be described in FIG. 24 and FIG. 25.

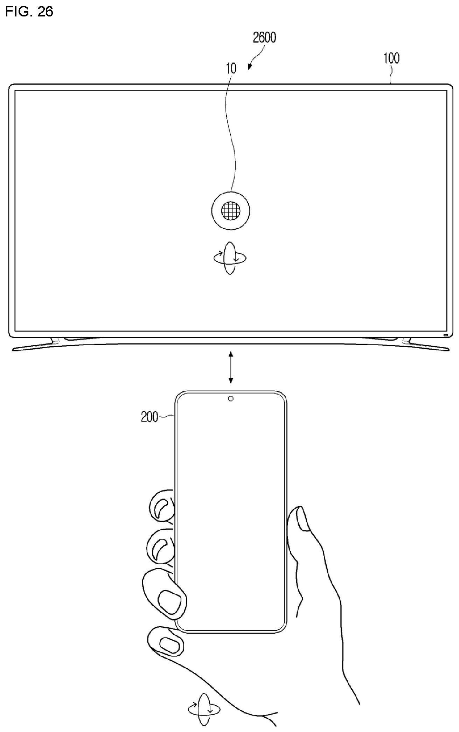

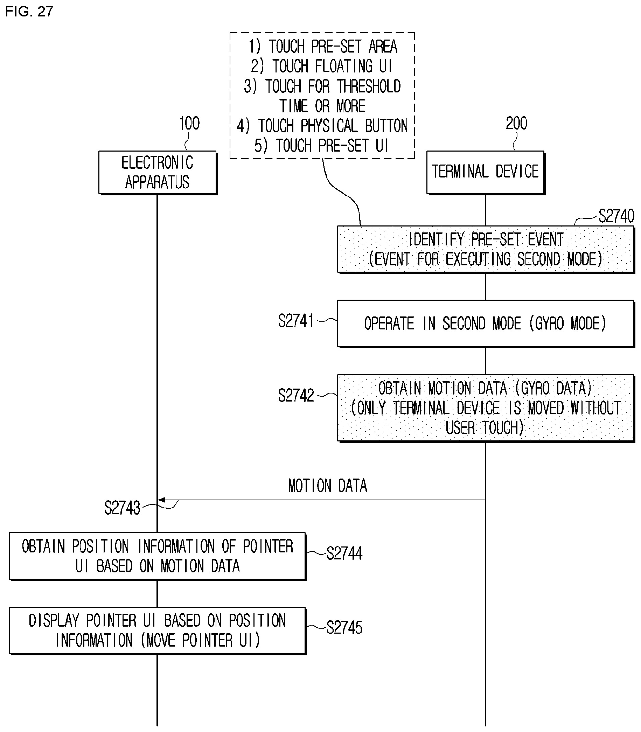

The terminal device 200 may transmit motion data to the electronic apparatus 100 without a user touching a touch screen (a display screen of the terminal device 200) or a physical button (the terminal device 200 being an operation interface). Operations associated therewith will be described in FIG. 26 and FIG. 27.

The at least one processor 120 may, based on receiving touch data including a user input received through a first area of the whole area of the display 140 of the terminal device 200, perform a function corresponding to the touch data.

The first area may be an area determined for transmitting the touch data of a whole touch area (whole display area) of the terminal device 200.

The at least one processor 120 may, based on the motion data being received based on a user input received through a second area of the whole area of the display 140 of the terminal device 200, control the display 140 for the pointer UI 10 to move based on the motion data.

The second area may be an area that receives a user input for transmitting the motion data of the whole touch area (whole display area) of the terminal device 200.

An operation of the user input being processed differently according to the first area and the second area classified in the terminal device 200 will be described in FIG. 17 to FIG. 19.

The at least one processor 120 may control, based on receiving the motion data obtained while a user input for selecting the floating UI 20 displayed on the display 140 of the terminal device 200 is received, the display 140 for the pointer UI 10 to move based on the motion data.

The floating UI 20 may be a UI for performing the second mode for transmitting the motion data. The floating UI 20 may be a UI displayed on the display of the terminal device 200. The floating UI 20 may be a trigger UI for starting an operation for transmitting the motion data. The floating UI 20 may be described as a mode conversion UI, a motion UI, a reaction UI, a pointer control UI, a gyro UI, and the like.

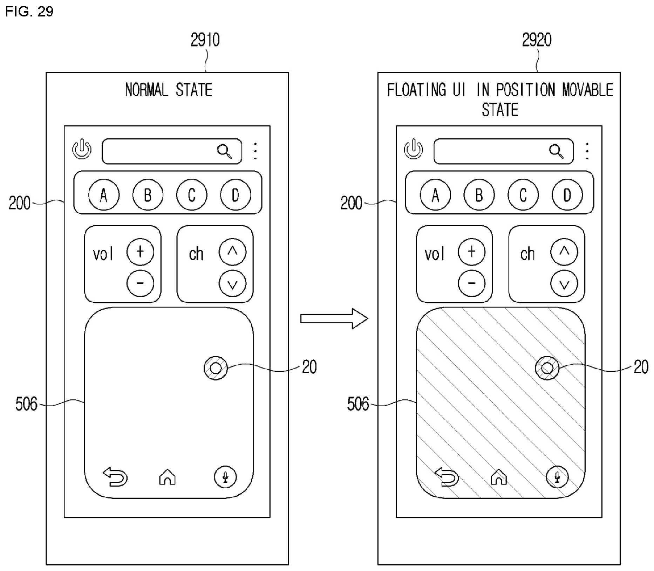

An operation for moving the floating UI 20 will be described in FIG. 29.

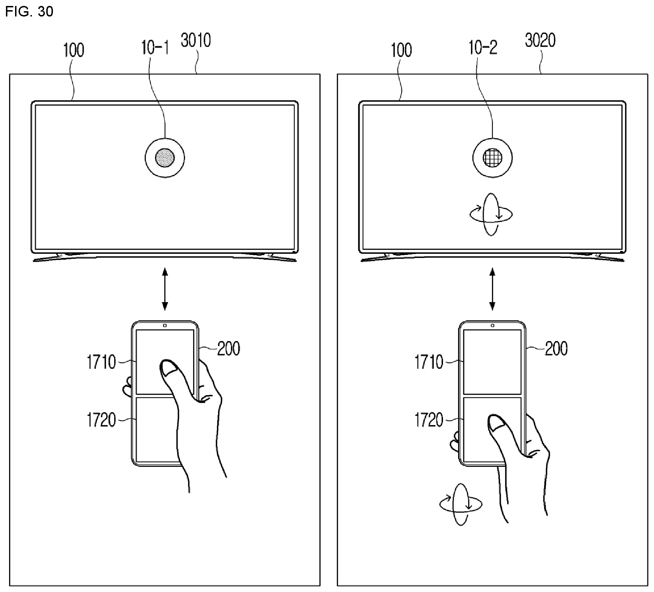

An operation for the pointer UI 10 being displayed in a different form according to an area at which a user input is received will be described in FIG. 30.

The motion data may include gyro data obtained through a gyro sensor (gyroscope sensor) included in the terminal device 200.

According to one or more embodiments, the at least one processor 120 may obtain the motion data including the gyro data. The terminal device 200 may include the gyro sensor. The terminal device 200 may obtain the gyro data through the gyro sensor. The gyro data may include information on a real-time rotation direction (2-dimensional or 3-dimensional) of the terminal device 200.

According to one or more embodiments, the at least one processor 120 may obtain the motion data including gyro data (gyroscope data) and acceleration data. The terminal device 200 may include an acceleration sensor. The terminal device 200 may obtain the acceleration data through the acceleration sensor. The acceleration data may include information on a real-time acceleration of the terminal device 200. The acceleration data may represent linear movement or acceleration of the terminal device 200. The gyroscope data may represent rotational movement or acceleration of the terminal device 200 about one or more axes of the terminal device 200.

The at least one processor 120 may adjust a moving speed of the pointer UI 10 based on movement pattern information of the pointer UI 10 stored in the memory 110.

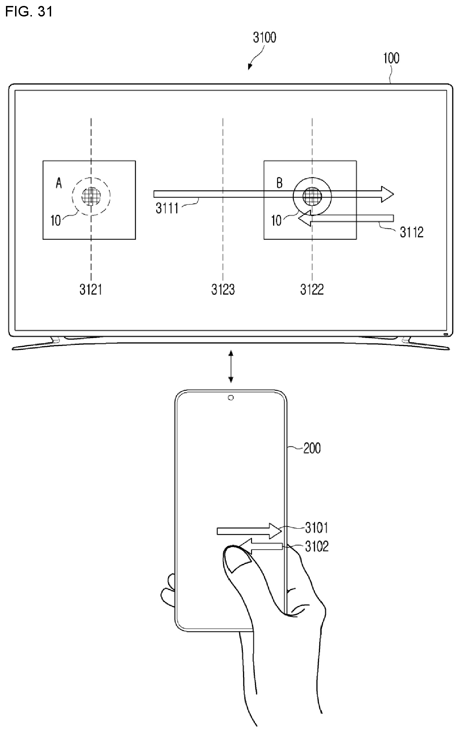

The movement pattern information of the pointer UI 10 may include information indicating a pattern by which the pointer UI 10 is moved to select an object. Detailed descriptions associated with the movement pattern information of the pointer UI 10 will be described in FIG. 31 to FIG. 34.

The at least one processor 120 may control the display 140 to display identification information corresponding to the terminal device 200 together with the pointer UI 10.

The identification information may be information for indicating the terminal device 200. The identification information may include at least one of a model name of the terminal device 200, and a name of the terminal device 200.

The identification information may include information for indicating a user. The identification information may include at least one of an identification (ID), an account, an e-mail, a name, an initial, a nickname, a representative image, and an avatar image.

An operation for displaying the identification information will be described in FIG. 37. A plurality of devices being connected will be described in FIG. 37 to FIG. 40.

When using motion data, the pointer UI 10 may be moved without having to drag a movement direction through the terminal device 200. When using motion data, the pointer UI 10 may be easily moved and user convenience may be increased.

According to one or more embodiments a pre-set event associated with an operation for transmitting touch data or an operation for transmitting motion data may be determined by the terminal device 200. The relevant embodiment will be described as a basic embodiment.

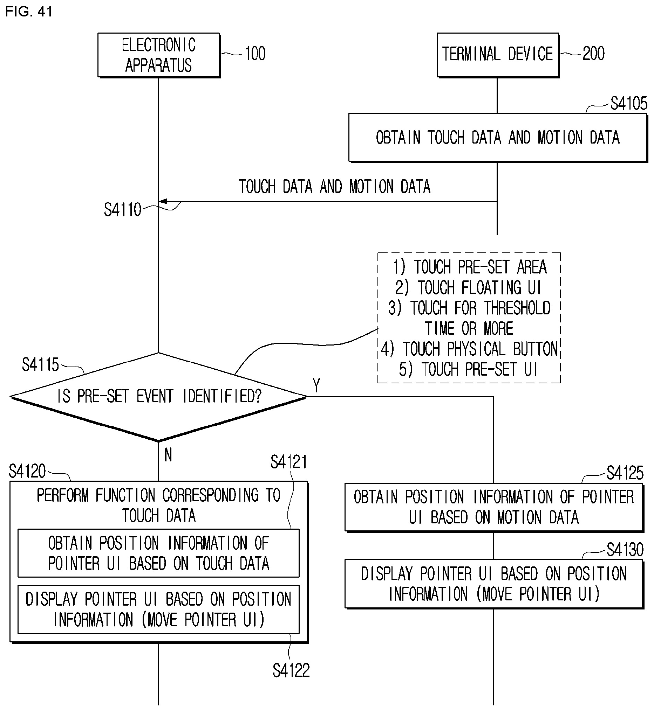

According to one or more embodiments, the electronic apparatus 100 may determine whether to move the pointer UI 10 by using the motion data according to the pre-set event. Descriptions associated therewith will be described in FIG. 41.

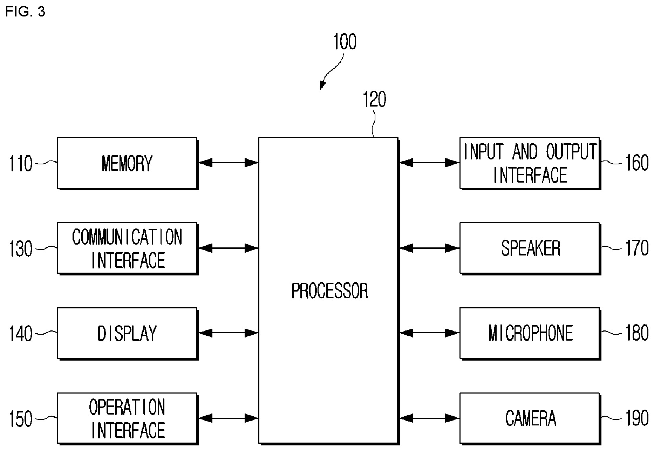

FIG. 3 is a block diagram illustrating a detailed configuration of the electronic apparatus 100 of FIG. 2 according to one or more embodiments.

Referring to FIG. 3, the electronic apparatus 100 may include at least one of the memory 110, the at least one processor 120, communication interface 130, the display 140, an operation interface 150, an input and output interface 160, a speaker 170, a microphone 180, and a camera 190.

The memory 110 may be implemented as an internal memory such as a ROM (e.g., an electrically erasable programmable read-only memory (EEPROM)) included in the at least one processor 120, a RAM, or the like, or implemented as a memory separate from the at least one processor 120. The memory 110 may be implemented in a form of a memory embedded in the electronic apparatus 100 according to a data storage use, or implemented in a form of a memory that is attachable to or detachable from the electronic apparatus 100. For example, data for driving of the electronic apparatus 100 may be stored in the memory embedded in the electronic apparatus 100, and data for an expansion function of the electronic apparatus 100 may be stored in the memory attachable to or detachable from the electronic apparatus 100.

The memory embedded in the electronic apparatus 100 may be implemented as at least one of a volatile memory (e.g., a dynamic RAM (DRAM), a static RAM (SRAM), or a synchronous dynamic RAM (SDRAM)), or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., NAND flash or NOR flash), a hard disk drive (HDD) or a solid state drive (SSD)). The memory attachable to or detachable from the electronic apparatus 100 may be implemented in a form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., USB memory) connectable to a USB port, or the like.

The memory 110 may store at least one instruction. The at least one processor 120 may perform various operations based on the instructions stored in the memory 110.

The at least one processor 120 may be implemented as a digital signal processor (DSP) for processing digital signals, a microprocessor, or a time controller (TCON). However, the embodiment is not limited thereto, and may include one or more of a central processing unit (CPU), a micro controller unit (MCU), a micro processing unit (MPU), a controller, an application processor (AP), a graphics-processing unit (GPU), a communication processor (CP), or an advanced reduced instruction set computer (RISC) machines (ARM) processor, or may be defined by the corresponding term. The at least one processor 120 may be implemented as a System on Chip (SoC) or a large scale integration (LSI) in which a processing algorithm is embedded, and may be implemented in a form of a field programmable gate array (FPGA). The at least one processor 120 may perform various functions by executing computer executable instructions stored in the memory.

The communication interface 130 may be a configuration for performing communication with external devices of various types according communication methods of various types. The communication interface 130 may include a wireless communication module or a wired communication module. Each communication module may be implemented in at least one hardware chip form.

The wireless communication module may be a module for communicating with the external device via wireless communication. For example, the wireless communication module may include at least one module of a Wi-Fi module, Bluetooth module, an infrared communication module, or other communication modules.

The Wi-Fi module and the Bluetooth module may perform communication in a Wi-Fi method and a Bluetooth method, respectively. When using the Wi-Fi module or the Bluetooth module, various connection information such as a service set identifier (SSID) and a session key may first be transmitted and received, and may transmit and receive various information after communicatively connecting using the same.

The infrared communication module may perform communication according to an infrared communication (Infrared Data Association (IrDA)) technology of transmitting data wirelessly in short range by using infrared rays present between visible rays and millimeter waves.

The other communication modules may include at least one communication chip that performs communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like, in addition to the above-described communication methods.

The wired communication module may be module that communicates with an external device via wired communication. For example, the wired communication module may include at least one of a local area network (LAN) module, an Ethernet module, a pair cable, a coaxial cable, an optical fiber cable, or an ultra wide-band (UWB) module.

According to various embodiments, the communication interface 130 may use the same communication module (e.g., a Wi-Fi module) to communicate with an external device such as a remote-control device and an external server.

According to various embodiments, the communication interface 130 may use different communication modules to communicate with the external device such as the remote-control device and the external server. For example, the communication interface 130 may use at least one of the Ethernet module or the Wi-Fi module to communicate with the external server, or use the Bluetooth module to communicate with the external device such as the remote-control device. However, the above is merely one embodiment, and the communication interface 130 may use at least one communication module of various communication modules when communicating with a plurality of external devices or with the external server.

The display 140 may be implemented as displays of various forms such as, for example, and without limitation, a liquid crystal display (LCD), an organic light emitting diode (OLED) display, a plasma display panel (PDP), and the like. In the display 140, a driving circuit, which may be implemented in a form of an amorphous silicon thin film transistor (a-si TFT), a low temperature poly silicon (LTPS) TFT, an organic TFT (OTFT), or the like, a backlight unit, and the like may be included together therewith. The display 140 may be implemented as a touch screen coupled with a touch sensor, a flexible display, a three-dimensional display (3D display), or the like. According to one or more embodiments of the disclosure, the display 140 may include not only a display panel that outputs an image, but also a bezel that houses the display panel. Specifically, according to one or more embodiments of the disclosure, the bezel may include a touch sensor for sensing a user interaction.

The operation interface 150 may be implemented as a device such as a button, a touch pad, a mouse, and a keyboard, or implemented as a touch screen capable of performing the above-described display function and an operation input function together therewith. The button may be buttons of various types such as a mechanical button, a touch pad, or a wheel which are formed at a random area at a front surface part or a side surface part, a rear surface part, or the like of an exterior of a main body of the electronic apparatus 100.

The input and output interface 160 may be any one interface of a High Definition Multimedia Interface (HDMI), a Mobile High-Definition Link (MHL), a Universal Serial Bus (USB), a Display Port (DP), a Thunderbolt, a Video Graphics Array (VGA) port, an RGB port, a D-subminiature (D-SUB), or a Digital Visual Interface (DVI). The input and output interface 160 may input and output at least one of audio and video signals. According to an implementation, the input and output interface 160 may include a port for inputting and outputting only audio signals and a port for inputting and outputting only video signals as separate ports, or may be implemented as one port that inputs and outputs both the audio signals and the video signals. The electronic apparatus 100 may transmit at least one of audio and video signals to the external device (e.g., an external display apparatus or an external speaker) through the input and output interface 160. An output port included in the input and output interface 160 may be connected with the external device, and the electronic apparatus 100 may transmit at least one of audio and video signals to the external device through the output port.

The input and output interface 160 may be connected with the communication interface. The input and output interface 160 may transmit information received from an external device to the communication interface or transmit information received through the communication interface to the external device.

The speaker 170 may be an element that outputs not only various audio data, but also various notification sounds, voice messages, or the like.

The microphone 180 may be a configuration for receiving a user voice or other sounds and converting to audio data. The microphone 180 may receive the user voice while in an activated state. For example, the microphone 180 may be formed as an integrated type at an upper side or a front surface direction, a side surface direction, and the like of the electronic apparatus 100. The microphone 180 may include various configurations such as a microphone that collects the user voice in an analog form, an amplifier circuit that amplifies the collected user voice, an A/D converter circuit that samples the amplified user voice and converts to a digital signal, a filter circuit that removes noise components from the converted digital signal, and the like.

The camera 190 may be a configuration for capturing a subject and generating a captured image, and the captured image may be a concept that includes both a moving image and a still image. The camera 190 may obtain an image with respect to at least one external device, and may be implemented as a camera, a lens, an infrared sensor, or the like.

The camera 190 may include a lens and an image sensor. Types of lenses include a typical generic-purpose lens, a wide angle lens, a zoom lens, and the like, and may be determined according to a type, a characteristic, use environment, and the like of the electronic apparatus 100.

FIG. 4 is a diagram illustrating an operation for displaying a pointer UI 10 in the electronic apparatus 100 according to one or more embodiments. As an image sensor, a Complementary Metal Oxide Semiconductor (CMOS) and a Charge Coupled Device (CCD), or the like may be used.

Referring to embodiment 400 in FIG. 4, the terminal device 200 may execute an application for controlling the electronic apparatus 100. The terminal device 200 may display a remote control screen on the display of the terminal device 200. The remote control screen may include at least one of a power control UI 401 or a voice input UI 402.

When a user input is received through the power control UI 401, the terminal device 200 may transmit a control command (on or off) associated with power control to the electronic apparatus 100.

When a user input is received through the voice input UI 402, the terminal device 200 may perform an operation associated with a voice recognition function.

According to one or more embodiments, the voice recognition function may be performed in the electronic apparatus 100. When the user input is received through the voice input UI 402, the terminal device 200 may transmit a control command for performing the voice recognition function to the electronic apparatus 100. The electronic apparatus 100 may perform the voice recognition function based on the control command received from the terminal device 200. The electronic apparatus 100 may activate the microphone for voice recognition. The electronic apparatus 100 may receive (or recognize) the user voice through the activated microphone.

According to one or more embodiments, the voice recognition function may be performed in the terminal device 200. When the user input is received through the voice input UI 402, the terminal device 200 may perform the voice recognition function. The terminal device 200 may activate a microphone of the terminal device 200. The terminal device 200 may receive (or recognize) the user voice through the activated microphone. The terminal device 200 may transmit the received user voice to the electronic apparatus 100.

The electronic apparatus 100 may display the pointer UI 10 associated with the control of the terminal device 200. The pointer UI 10 may be an indicator that is moved by the control of the terminal device 200. In FIG. 4, the pointer UI 10 has been described in a circular form, but is not limited thereto. The form and shape of the pointer UI 10 may be varied.

The pointer UI 10 may be changed in position at which pointer UI 10 is displayed according to an operation command of the user input through the terminal device 200. The terminal device 200 may receive a user input (or a user command) for moving the pointer UI 10. The terminal device 200 may transmit the received user input to the electronic apparatus 100.

The operation for displaying the pointer UI 10 will be described in FIG. 8 and FIG. 9.

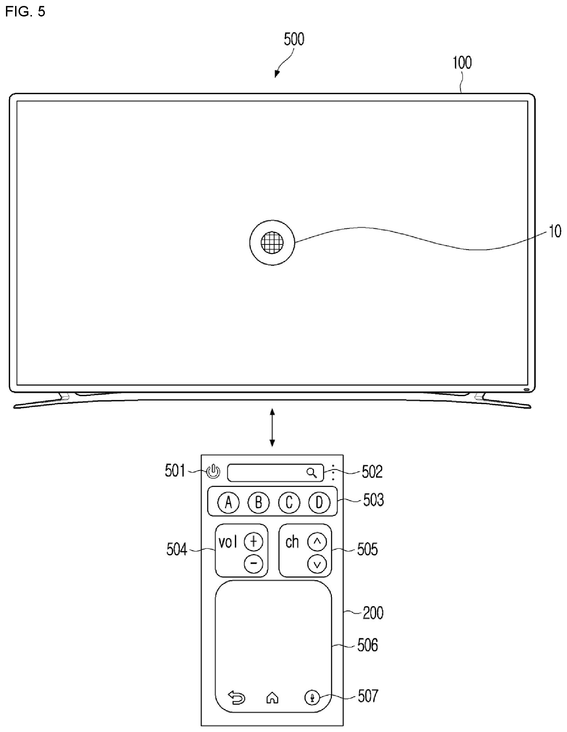

FIG. 5 is a diagram illustrating an operation for displaying the pointer UI 10 in the electronic apparatus 100 according to one or more embodiments.

Referring to embodiment 500 in FIG. 5, the terminal device 200 may execute an application for controlling the electronic apparatus 100. The terminal device 200 may display the remote control screen on the display of the terminal device 200. The remote control screen may include at least one of a power control UI 501, a search UI 502, a favorite UI 503, a volume control UI 504, a channel control UI 505, a touch input UI 506, or a voice input UI 507. An arrangement structure of the UIs may be changed. A mute UI may be arranged instead of the voice input UI 507.

The terminal device 200 may be connected with the electronic apparatus 100. When connected with the terminal device 200, the electronic apparatus 100 may display the pointer UI 10. The electronic apparatus 100 may display the pointer UI 10 at a pre-set position of the whole area of the display 140.

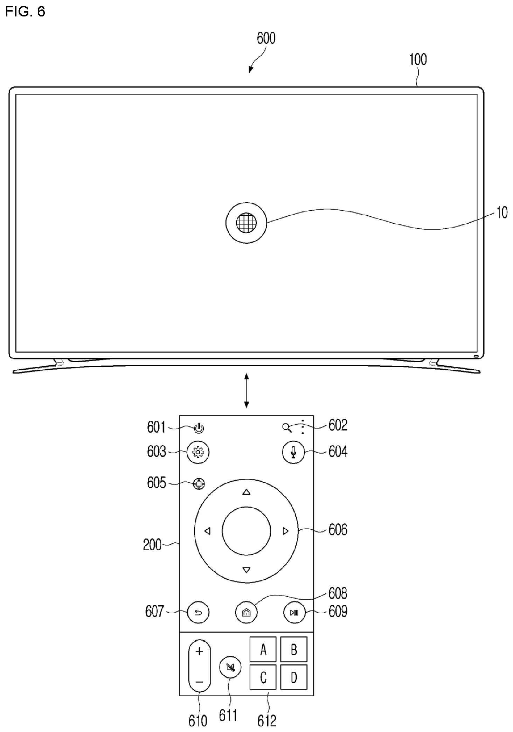

FIG. 6 is a diagram illustrating an operation for displaying the pointer UI 10 in the electronic apparatus 100 according to one or more embodiments.

Referring to embodiment 600 in FIG. 6, the terminal device 200 may execute an application for controlling the electronic apparatus 100. The terminal device 200 may display the remote control screen on the display of the terminal device 200. The remote control screen may include at least one of a power control UI 601, a search UI 602, a setting UI 603, a voice recognition UI 604, a screen size adjusting UI 605, a movement operation UI 606, and a previous screen displaying UI 607, a home screen displaying UI 608, a playback UI 609, a volume control UI 610, a mute UI 611, or a favorite UI 612.

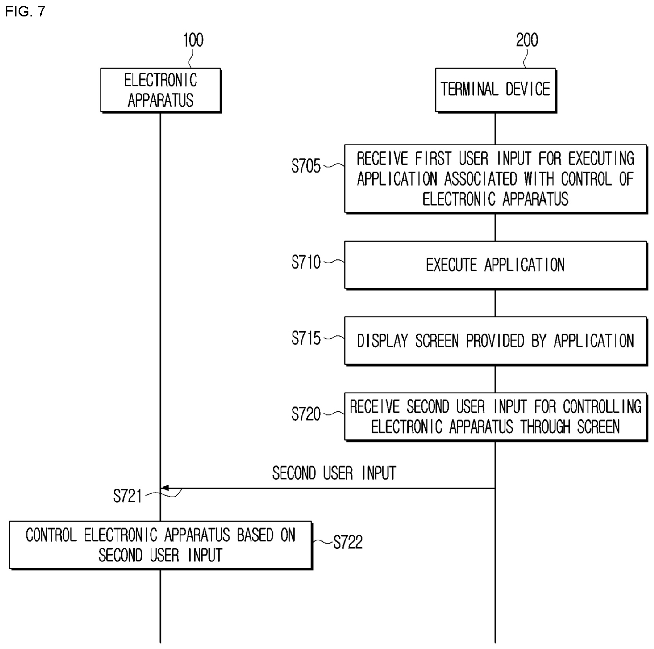

FIG. 7 is a diagram illustrating an operation for controlling the electronic apparatus 100 through the terminal device 200 according to one or more embodiments.

The terminal device 200 may receive a first user input for executing an application associated with control of the electronic apparatus 100 (S705). The terminal device 200 may execute an application for controlling the electronic apparatus 100 according to receiving the first user input (S710).

The terminal device 200 may display a screen provided by the application (S715). The terminal device 200 may receive a second user input for controlling the electronic apparatus 100 through the screen (S720). The terminal device 200 may transmit the second user input to the electronic apparatus 100 (S721).

The electronic apparatus 100 may receive the second user input from the terminal device 200. The electronic apparatus 100 may control the electronic apparatus 100 based on the second user input (S722).

For classification, the first user input may be described as the user input, and the second user input may be described as the user command. Ordinal numerals described in front of the user input and the user command may be changed according to the embodiment.

FIG. 8 is a diagram illustrating an operation for displaying the pointer UI 10 in the electronic apparatus 100 according to one or more embodiments.

Operations S805, S810, S815, S820, S821, and S822 in FIG. 8 may correspond to operations S705, S710, S715, S720, S721, and S722 in FIG. 7. Redundant descriptions thereof will be omitted.

When the application is executed, the terminal device 200 may transmit a notification indicating that the application has been executed to the electronic apparatus 100 (S811).

The electronic apparatus 100 may receive the notification that the application has been executed from the terminal device 200. When a pre-set notification is received, the electronic apparatus 100 may display the pointer UI 10. The electronic apparatus 100 may display a screen including the pointer UI 10.

FIG. 9 is a diagram illustrating an operation for displaying the pointer UI 10 after a pre-set event is identified according to one or more embodiments.

Operations S905, S910, S915, S920, S921, and S922 in FIG. 9 may correspond to operations S705, S710, S715, S720, S721, and S722 in FIG. 7. Redundant descriptions thereof will be omitted.

After the screen provided by the application is displayed, the terminal device 200 may determine whether the pre-set event associated with the transmission of motion data has been identified (S916).

The pre-set event associated with the transmission of motion data may include at least one of touching a pre-set area, touching a floating UI, an event of touching a random area (or any area) for a threshold time or more, touching (pressing) a physical button, or touching a pre-set UI. Descriptions associated therewith will be described in FIG. 17 to FIG. 27.

When a pre-set event is identified (S916-Y), the terminal device 200 may transmit a notification indicating that the pre-set event has been identified to the electronic apparatus 100 (S917).

The electronic apparatus 100 may receive the notification that the pre-set event has been identified from the terminal device 200. When the notification indicating that the pre-set event has been identified has been received, the electronic apparatus 100 may display the pointer UI 10 (S918).

FIG. 10 is a diagram illustrating an operation in which the electronic apparatus 100 and the terminal device 200 are connected according to one or more embodiments.

Referring to embodiment 1000 in FIG. 10, a guide UI indicating that the electronic apparatus 100 may be controlled through the terminal device 200 may be provided to the user.

The electronic apparatus 100 may identify whether it is in a state connectable with the terminal device 200. If connectable with the terminal device 200, the electronic apparatus 100 may display a guide UI 1010. The guide UI 1010 may include at least one of information indicating that the electronic apparatus 100 may be controlled through the terminal device 200 (text information and/or image information), or information guiding to check the terminal device 200.

The terminal device 200 may identify whether it is in a connectable state with the electronic apparatus 100. If connectable with the electronic apparatus 100, the terminal device 200 may display a guide UI 1020. The guide UI 1020 may include at least one of information indicating that the electronic apparatus 100 may be controlled through the terminal device 200 (text information and/or image information), or information inquiring as to whether to control the electronic apparatus 100. The guide UI 1020 may be displayed on full screen or as a pop-up screen.

FIG. 11 is a diagram illustrating an operation in which a pre-registered electronic apparatus 100 and the terminal device 200 are connected according to one or more embodiments.

Operations S1110, S1115, S1120, S1121, and S1122 in FIG. 11 may correspond to operations S710, S715, S720, S721, and S722 in FIG. 7. Redundant descriptions thereof will be omitted.

It may be assumed that the electronic apparatus 100 and the terminal device 200 are registered with one another. It may be assumed that the electronic apparatus 100 and the terminal device 200 have a history of being connected to each other, and store information on one another.

The electronic apparatus 100 may determine whether it is connectable with the terminal device 200. The terminal device 200 may determine whether it is connectable with the electronic apparatus 100.

If it is identified as connectable with the terminal device 200, the electronic apparatus 100 may provide a first guide UI to connect with the terminal device 200 (S1101). The first guide UI may be the guide UI 1010 in FIG. 10.

If it is identified as connectable with the electronic apparatus 100, the terminal device 200 may provide a second guide UI for connecting with the electronic apparatus 100 (S1102). The second guide UI may be the guide UI 1020 in FIG. 10.

The terminal device 200 may identify whether the first user input for controlling the electronic apparatus 100 is received through the second guide UI (S1103). When the first user input is received (S1103-Y), the terminal device 200 may transmit the first user input to the electronic apparatus 100 (S1104).

The electronic apparatus 100 may receive the first user input for controlling the electronic apparatus 100 from the terminal device 200. The electronic apparatus 100 may approve connection to the terminal device 200 by responding to the first user input (S1105). When the electronic apparatus 100 approves connection to the terminal device 200, the electronic apparatus 100 may transmit a notification indicating connection approval to the terminal device 200.

The terminal device 200 may receive the notification of connection approval. When the notification of connection approval is received, the terminal device 200 may execute an application for controlling the electronic apparatus 100 (S1110). After the application has been executed, operations S1115, S1120, S1121, and S1122 may be performed.

FIG. 12 is a diagram illustrating a touch input table according to one or more embodiments.

Referring to FIG. 12, a touch input table 1200 may include a function corresponding to the user input. The touch input table may include a function corresponding to each of the touch inputs (or touch types) indicating the user input.

In one or more examples, when a user input (a drag) is received, the electronic apparatus 100 may perform a function of moving the pointer UI 10 based on the touch data.

In one or more examples, when a user input (a tap) is received, the electronic apparatus 100 may perform a function of selecting an object (or an item) corresponding to a position of a current pointer.

In one or more examples, when a user input (a long tap) is received, the electronic apparatus 100 may perform a function of displaying a home screen (or a pre-set screen).

In one or more examples, when a user input (a double tap) is received, the electronic apparatus 100 may perform a function of displaying a previous screen.

In one or more examples, when a user input (an edge scroll) is received, the electronic apparatus 100 may perform a function of scrolling with respect to the screen that is currently being displayed.

In one or more examples, when a user input associated with a pre-set event is received, the electronic apparatus 100 may perform a function of moving the pointer UI 10 based on gyro data. The pre-set event may include at least one of an event of touching a pre-set area, an event of touching a floating UI, an event of touching a random area for a threshold time or more, an event of touching (pressing) a physical button, or an event of touching a pre-set UI. Descriptions associated therewith will be described in FIG. 17 to FIG. 27.

The event of touching a random area for a threshold time or more may be different from the long tap. The long tap may mean a tap input being received for a first threshold time. The pre-set event may mean a tap input being received for a second threshold time. For example, the second threshold time may be longer than the first threshold time.

The function corresponding to a touch input may be different according to a mode of the terminal device 200. The first mode may be a mode for transmitting the touch data. The second mode may be a mode for transmitting the motion data.

When the terminal device 200 is in the first mode, a specific function may be performed based on a portion of information (#01, #02, #03, #04, and #05) of the touch input table.

When the terminal device 200 is in the second mode, a specific function may be performed based on a portion of the information (#06) of the touch input table.

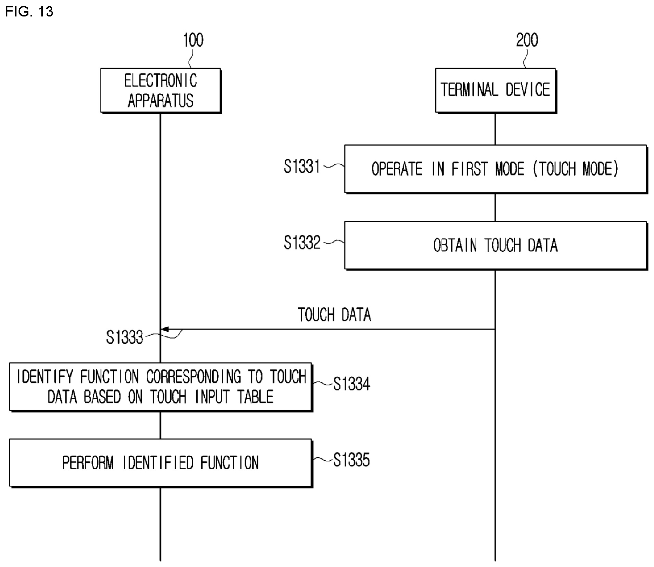

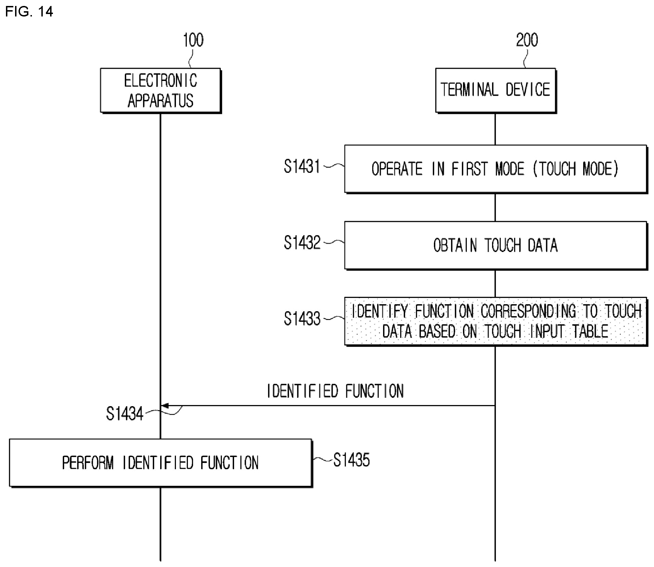

The touch input table 1200 may be stored in the electronic apparatus 100 and/or the terminal device 200. An operation of the electronic apparatus 100 using the touch input table 1200 may be described in FIG. 13. An operation of the terminal device 200 using the touch input table 1200 will be described in FIG. 14.

FIG. 13 is a diagram illustrating an operation in which the electronic apparatus 100 performs a function corresponding to touch data according to one or more embodiments.

Referring to FIG. 13, the terminal device 200 may operate in the first mode. The first mode may be a mode for transmitting the touch data to the electronic apparatus 100. The first mode may be described as a touch mode. The first mode may be a basic mode. The terminal device 200 may operate in the first mode which is the basic mode if the pre-set event is not identified.

The terminal device 200 may obtain touch data (S1332). The touch data may include various inputs associated with the user touch from the terminal device 200. The touch data may include a touch position indicating whether the user has touched which position and a touch time indicating whether how long the position has been touched. The terminal device 200 may transmit the touch data to the electronic apparatus 100 (S1333).

The electronic apparatus 100 may receive the touch data from the terminal device 200. The electronic apparatus 100 may store the touch input table. The electronic apparatus may identify a function corresponding to the touch data based on the touch input table (S1334). The electronic apparatus 100 may perform the identified function (S1335). Additional descriptions associated therewith will be described in FIG. 15 and FIG. 16.

FIG. 14 is a diagram illustrating an operation in which the terminal device 200 identifies a function corresponding to touch data according to one or more embodiments.

Operations S1431, S1432, and S1435 in FIG. 14 may correspond to operations S1331, S1332, and S1335 in FIG. 13. Redundant descriptions thereof will be omitted.

The terminal device 200 may store the touch input table. The terminal device 200 may identify a function corresponding to the touch data based on the touch input table (S1433). The terminal device 200 may transmit information indicating the identified function to the electronic apparatus 100 (S1434). The information indicating the identified function may be described as function information, function data, a control command, and the like.

The electronic apparatus 100 may receive information on the identified function from the terminal device 200. The electronic apparatus 100 may perform the identified function (S1435).

FIG. 15 is a diagram illustrating an operation for moving the pointer UI 10 based on touch data according to one or more embodiments.

Referring to embodiment 1500 in FIG. 15, the terminal device 200 may receive the user input (drag). The terminal device 200 may transmit a signal indicating the user input (drag) to the electronic apparatus 100.

The electronic apparatus 100 may receive the signal indicating the user input (drag) from the terminal device 200. The electronic apparatus 100 may change a display position of the pointer UI 10 based on the user input (drag). The electronic apparatus 100 may change the display position of the pointer UI 10 based on the user input (drag). The electronic apparatus 100 may identify a new position based on a current position of the pointer UI 10 and a correction value corresponding to the user input (drag). The new position may be described as a correction position or a change position. The electronic apparatus 100 may display a screen in which the pointer UI 10 is moved from the current position to the new position.

FIG. 16 is a diagram illustrating an operation for moving the pointer UI 10 based on touch data according to one or more embodiments.

Operations S1631, S1632, and S1633 in FIG. 16 may correspond to operations S1331, S1332, and S1333 in FIG. 13. Redundant descriptions thereof will be omitted.

The electronic apparatus 100 may receive the touch data from the terminal device 200. The electronic apparatus 100 may obtain position information of the pointer UI 10 based on the touch data (S1634). The position information may include the current position of the pointer UI 10 and the new position (or change position or correction position) of the pointer UI 10. The current position may be described as a first position. The new position may be described as a second position.

The electronic apparatus 100 may obtain the drag signal from the user input included in the touch data. The electronic apparatus 100 may obtain a correction value (or a movement value) of the pointer UI 10 based on the drag signal. The electronic apparatus 100 may identify a new position of the pointer UI 10 which reflects the correction value based on the current position of the pointer UI 10.

The electronic apparatus 100 may obtain the position information of the pointer UI 10 that includes the current position of the pointer UI 10 and the new position of the pointer UI 10. The electronic apparatus 100 may display the pointer UI 10 based on the position information. The electronic apparatus 100 may change the display position of the pointer UI 10 to move from the current position to the new position.

According to one or more embodiments, the electronic apparatus 100 may move the pointer UI 10 without (concept of) the position information. The electronic apparatus 100 may move the pointer UI 10 by using the current position of the pointer UI 10 and the new position of the pointer UI 10.

FIG. 17 is a diagram illustrating an operation for moving the pointer UI 10 by touching a pre-set area according to one or more embodiments.

Referring to FIG. 17, the terminal device 200 may operate a gyro mode. The gyro mode may be a mode for transmitting the motion data from the terminal device 200 to the electronic apparatus 100. A full screen of the display of the terminal device 200 may include a pre-set first area 1710 and a pre-set second area 1720. The first area 1710 and the second area 1720 may be changed by a user setting.

The first area 1710 may be an area for receiving a user input for transmitting the touch data to the electronic apparatus 100. When a user input is received from the first area 1710, the terminal device **2**00 may transmit the touch data indicating the user input to the electronic apparatus 100.

The second area 1720 may be an area for receiving a user input for transmitting the motion data to the electronic apparatus 100. When a user input is received from the second area 1720, the terminal device 200 may obtain gyro data by using the gyro sensor included in the terminal device 200. The terminal device 200 may transmit the motion data including the gyro data to the electronic apparatus 100.

The electronic apparatus 100 may receive the motion data from the terminal device 200. The electronic apparatus 100 may move the pointer UI 10 based on the motion data. The electronic apparatus 100 may obtain a correction value of the pointer UI based on the motion data. The electronic apparatus 100 may identify the new position of the pointer UI 10 by applying the correction value to the current position of the pointer UI 10. The electronic apparatus 100 may display the pointer UI 10 that moves from the current position to the new position.

According to one or more embodiments, the first area 1710 and the second area 1720 may be displayed in the same color.

According to one or more embodiments, the first area 1710 and the second area 1720 may be displayed in different colors. The first area 1710 may be displayed in a first color, and the second area 1720 may be displayed in a second color (different from the first color). The color may be described as a background color.

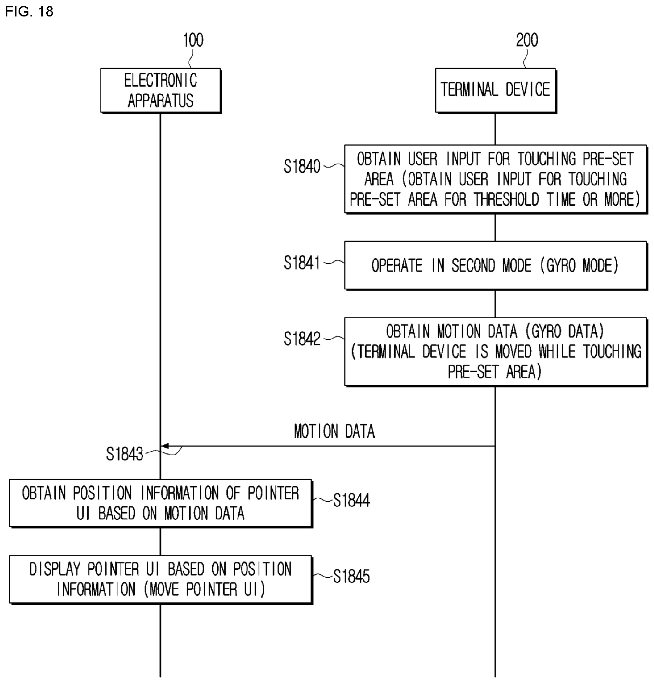

FIG. 18 is a diagram illustrating an operation for moving the pointer UI 10 by touching a pre-set area according to one or more embodiments.

Referring to FIG. 18, the terminal device 200 may obtain a user input for touching a pre-set area (S1840). The pre-set area may be an area for receiving the user input for transmitting the motion data obtained from the terminal device 200 to the electronic apparatus 100. The pre-set area may be the second area 1720 in FIG. 17.

When a user input is received through the second area 1720, the terminal device 200 may operate in the second mode (or gyro mode) (S1841).

While the user input is received through the second area 1720, the terminal device 200 may obtain gyro data through a gyro sensor of the terminal device 200. The terminal device 200 may obtain motion data including the gyro data (S1842). The terminal device 200 may transmit the motion data to the electronic apparatus 100 (S1843).

The electronic apparatus 100 may receive the motion data from the terminal device 200. The electronic apparatus 100 may obtain the position information of the pointer UI 10 based on the motion data (S1844). The position information of the pointer UI 10 may include the current position of the pointer UI 10 and the new position of the pointer UI 10. The electronic apparatus 100 may obtain a correction value associated with the movement of the pointer UI 10 based on the motion data. The electronic apparatus 100 may calculate the new position of the pointer UI 10 by applying the correction value to the current position of the pointer UI 10. The electronic apparatus 100 may obtain the position information of the pointer UI 10 that includes the current position of the pointer UI 10 and the new position of the pointer UI 10.

The electronic apparatus 100 may display the pointer UI 10 based on the position information (S1845). The electronic apparatus 100 may display the pointer UI 10 that moves from the current position to the new position based on the position information.

According to one or more embodiments, the terminal device 200 may receive a user input for touching a pre-set area for a threshold time or more. When the user input for touching the pre-set area for the threshold time or more is received, the terminal device 200 may operate in the second mode.

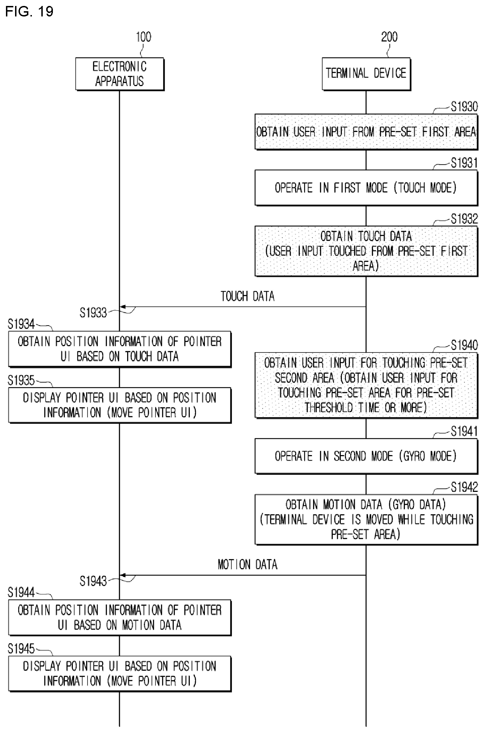

FIG. 19 is a diagram illustrating an operation for processing touch data and an operation for processing motion data according to one or more embodiments.

Operations S1931, S1932, S1933, S1934, and S1935 in FIG. 19 may correspond to operations S1631, S1632, S1633, S1634, and S1635 in FIG. 16. Operations S1940, S1941, S1942, S1943, S1944, and S1945 in FIG. 19 may correspond to operations S1840, S1841, S1842, S1843, S1844, and S1845. Redundant descriptions thereof will be omitted.

The terminal device 200 may obtain a user input in the pre-set first area (S1930). The pre-set first area may be the first area 1710 in FIG. 17.

When a user input is received from the pre-set first area, the terminal device 200 may operate in the first mode (or touch mode) (S1931). The terminal device 200 may receive the user input through the pre-set first area. The terminal device 200 may obtain touch data indicating the user input received from the first area (S1932). When the touch data is obtained, operations S1933, S1934, and S1935 may be performed.

The terminal device 200 may obtain the user input from the pre-set second area (S1940). The pre-set second area may be the second area 1720 in FIG. 17.

When the user input is received from the pre-set second area, the terminal device 200 may operate in the second mode (or gyro mode) (S1941). The terminal device 200 may receive the user input through the pre-set second area. The terminal device 200 may obtain the motion data (or gyro data) while the user input is being received from the second area (S1942). When the motion data is obtained, operations S1943, S1944, and S1945 may be performed.

FIG. 20 is a diagram illustrating the floating UI 20 according to one or more embodiments.

Referring to embodiment 2000 in FIG. 20, the terminal device 200 may display the floating UI 20. The floating UI 20 may be a UI for operating the terminal device 200 in the second mode (or gyro mode). The floating UI 20 may be displayed in a pop-up form on the screen displayed in the terminal device 200.

The terminal device 200 may determine whether a user input is received from a position at which the floating UI 20 is displayed. The terminal device 200 may receive the user input through the floating UI 20. When the user input for touching the floating UI 20 is received, the terminal device 200 may transmit the motion data (gyro data) to the electronic apparatus 100.

The electronic apparatus 100 may receive the motion data from the terminal device 200. The electronic apparatus 100 may move the pointer UI 10 based on the motion data.

According to one or more embodiments, the terminal device 200 may receive a user input for continuously touching the floating UI 20. At a time-point at which the floating UI 20 is not touched, the terminal device 200 may stop the second mode and operate in the first mode.

According to one or more embodiments, the terminal device 200 may identify an area corresponding to a position at which the floating UI 20 is displayed as the pre-set area in FIG. 18.

FIG. 21 is a diagram illustrating an operation for controlling the pointer UI 10 displayed in the electronic apparatus 100 through the floating UI 20 according to one or more embodiments.

Operations S2141, S2143, S2144, and S2145 in FIG. 21 may perform operations S1841, S1843, S1844, and S1845 in FIG. 18. Redundant descriptions thereof will be omitted.

The terminal device 200 may display the floating UI 20 for executing the second mode (S2140-1). The terminal device 200 may obtain the user input for touching the floating UI 20 (S2140-2).

When the user input for touching the floating UI 20 is received, the terminal device 200 may operate in the second mode (or gyro mode) (S2141). The terminal device 200 may obtain the motion data (or gyro data) (S2142). While the user is touching the floating UI 20, the terminal device 200 may obtain motion data indicating movement of the terminal device 200. When the motion data is obtained, the terminal device 200 may perform operations S2143, S2144, and S2145.

According to one or more embodiments, the terminal device 200 may transmit only the motion data obtained while the user is touching the floating UI 20 to the electronic apparatus 100. The user has to be touching the floating UI 20 in order to move the pointer UI 10 through the motion data.

According to one or more embodiments, the user input with respect to the floating UI 20 may not be received continuously after performing the operation in the second mode through the floating UI 20. The terminal device 200 may transmit the motion data to the electronic apparatus 100 even if the user input is not continuously received. In order to change from the second mode to the first mode, the user may touch the floating UI 20 once again. An operation for transmitting the motion data to the electronic apparatus 100 even without touching a specific area of the terminal device 200 will be described in FIG. 26.

FIG. 22 is a diagram illustrating an operation for displaying the pointer UI 10 based on a touch recognized for a pre-set time according to one or more embodiments.

Referring to embodiment 2200 in FIG. 22, the terminal device 200 may receive a user input for a threshold time with respect to a random area. When a user input for continuously touching one position for a threshold time or more is received, the terminal device 200 may operate in the second mode. While operating in the second mode, the terminal device 200 may transmit the motion data to the electronic apparatus 100.

The electronic apparatus 100 may receive the motion data from the terminal device 200. The electronic apparatus 100 may move the pointer UI 10 based on the motion data.

A user input received for the threshold time may be different from a typical long tap input. When a user input for touching a specific position for a time longer than a time for the long tap is received, the electronic apparatus 100 may operate in the second mode.

FIG. 23 is a diagram illustrating an operation for displaying the pointer UI 10 based on a touch recognized for a pre-set time according to one or more embodiments.

Operations S2341, S2343, S2344, and S2345 in FIG. 23 may perform operations S1841, S1843, S1844, and S1845 in FIG. 18. Redundant descriptions thereof may be omitted.

The terminal device 200 may obtain a user input for touching a random area (or a random position) for a threshold time or more (S2340). The threshold time may be changed by the user setting. When the user input for touching the random area for the threshold time or more is received, the terminal device 200 may operate in the second mode (S2341).

The terminal device 200 may obtain the motion data (or gyro data) while touching the random area (S2342). While the user is touching the random area of the terminal device 200, the terminal device 200 may obtain the motion data indicating movement of the terminal device 200. When the motion data is obtained, operations S2343, S2344, and S2345 may be performed.

FIG. 24 is a diagram illustrating an operation for moving the pointer UI 10 by using a physical button of the terminal device 200 according to one or more embodiments.

Referring to embodiment 2400 in FIG. 24, the terminal device 200 may receive a user input for touching (or pressing) a pre-set physical button 2410. When a user input for pressing the pre-set physical button 2410 is received, the terminal device 200 may operate in the second mode. When operating in the second mode, the terminal device 200 may transmit the motion data to the electronic apparatus 100. The electronic apparatus 100 may move the pointer UI 10 based on the motion data transmitted from the terminal device 200.

FIG. 25 is a diagram illustrating an operation for moving the pointer UI 10 by using a physical button of the terminal device 200 according to one or more embodiments.

Operations S2541, S2543, S2544, and S2545 in FIG. 25 may perform operations S1841, S1843, S1844, and S1845 in FIG. 18. Redundant descriptions thereof may be omitted.

The terminal device 200 may obtain a user input for touching the pre-set physical button (S2540). When the user input for touching the pre-set physical button is received, the terminal device 200 may operate in the second mode (S2541).

The terminal device 200 may obtain the motion data (gyro data) while the pre-set physical button is being touched (S2542). While the user is touching the pre-set physical button of the terminal device 200, the terminal device 200 may obtain motion data indicating movement of the terminal device 200. When the motion data is obtained, operations S2543, S2544, and S2545 may be performed.

According to one or more embodiments, the terminal device 200 may transmit only the motion data obtained while the user is touching the pre-set physical button to the electronic apparatus 100. The user has to be touching the pre-set physical button to move the pointer UI 10 through the motion data.

According to one or more embodiments, the user input with respect to the pre-set physical button may not be continuously received after performing the operation in the second mode through the pre-set physical button. The terminal device 200 may transmit the motion data to the electronic apparatus 100 even if the user input is not continuously received. In order to change from the second mode to the first mode, the user may touch the pre-set physical button once again. An operation for transmitting the motion data to the electronic apparatus 100 even when a specific area of the terminal device 200 is not touched will be described in FIG. 26.

FIG. 26 is a diagram illustrating an operation for moving the pointer UI 10 by identifying a pre-set event according to one or more embodiments.

Referring to embodiment 2600 in FIG. 26, the terminal device 200 may transmit the motion data to the electronic apparatus 100 while not touching a touch area of the terminal device 200. While the terminal device 200 is performed in the second mode, the motion data may be transmitted to the electronic apparatus 100. In order to maintain the second mode, the user may not have to touch the specific area (or a specific position or a specific physical button). In order to cancel the second mode, the terminal device 200 may receive a new user input.

FIG. 27 is a diagram illustrating an operation for moving the pointer UI 10 by identifying a pre-set event according to one or more embodiments.

Operations S2741, S2743, S2744, and S2745 in FIG. 27 may perform operations S1841, S1843, S1844, and S1845 in FIG. 18. Redundant descriptions thereof may be omitted.

Referring to FIG. 27, the terminal device 200 may identify a pre-set event (S2740). The pre-set event may indicate an event for executing the second mode. The pre-set event may include at least one of an event for touching a pre-set area, an event for touching a floating UI, an event for touching a random area for a threshold time or more, an event for touching (pressing) a physical button, or an event for touching a pre-set UI.

When the pre-set event is identified, the terminal device 200 may operate in the second mode. While operating in the second mode, the terminal device 200 may obtain motion data, The terminal device 200 may maintain the second mode even while a touch input of the user is not continued. The terminal device 200 may obtain the motion data while there is no the touch input of the user (S2742). When the motion data is obtained, operations S2743, S2744, and S2745 may be performed.

In one or more examples (referring to FIG. 17, FIG. 18, and FIG. 19), when the user input touching the pre-set area is received, the terminal device 200 may change from the first mode to the second mode. The terminal device 200 may operate in the second mode while the user input is not being received. When the user input retouching the pre-set area is received, the terminal device 200 may change from the second mode to the first mode.

In one or more examples (referring to FIG. 20 and FIG. 21), when the user input touching the floating UI 20 is received, the terminal device 200 may change from the first mode to the second mode. The terminal device 200 may operate in the second mode while the user input is not being received. When the user input retouching the floating UI 20 is received, the terminal device 200 may change from the second mode to the first mode.

In one or more examples (referring to FIG. 22 and FIG. 23), when the user input touching a random area for a threshold time or more is received, the terminal device 200 may change from the first mode to the second mode. The terminal device 200 may operate in the second mode while the user input is not being received. When the user input touching a random area for a threshold time or more is received, the terminal device 200 may change from the second mode to the first mode.

In one or more examples (referring to FIG. 24 and FIG. 25), when the user input touching the pre-set physical button is received, the terminal device 200 may change from the first mode to the second mode. The terminal device 200 may operate in the second mode while the user input is not being received. When the user input retouching the pre-set physical button is received, the terminal device **2**00 may change from the second mode to the first mode.

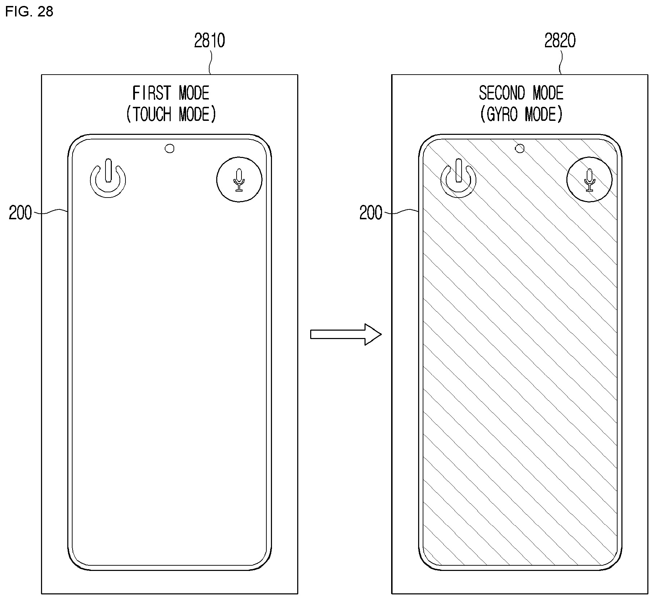

FIG. 28 is a diagram illustrating a mode of the terminal device 200 according to one or more embodiments.

Referring to embodiment 2810 in FIG. 28, the terminal device 200 may operate in the first mode (or touch mode). While performed in the first mode, the terminal device 200 may display a screen in the first color (or a first background color).

Referring to embodiment 2820 in FIG. 28, the terminal device 200 may operate in the second mode (or gyro mode). While performing the second mode, the terminal device 200 may change color with respect to the touch area. While performed in the second mode, the terminal device 200 may display the screen in the second color (or a second background color).

The first color and the second color may be different. The second color may be a more emphasized color than the first color. The user may not directly gaze at the terminal device 200. Through an operation of displaying the screen in the second color, the user may easily recognize that the terminal device 200 is operating in the second mode.

FIG. 29 is a diagram illustrating a movable state of the floating UI 20 according to one or more embodiments.

The terminal device 200 in FIG. 29 may correspond to the terminal device 200 described in FIG. 5. Redundant descriptions thereof will be omitted.

Referring to embodiment 2910 in FIG. 29, the terminal device 200 may display the floating UI 20. The terminal device 200 may receive a user input while the floating UI 20 is displayed.

The terminal device 200 may move the display position of the floating UI 20. When the pre-set event is identified, the terminal device 200 may provide the user with a state for moving the floating UI 20. The state for moving the floating UI 20 may be described as a mode for moving the floating UI 20. The state for moving the floating UI 20 may be described as a moving mode of the floating UI 20.

The pre-set event may indicate an event of the user input for moving the floating UI 20 being received.

According to one or more embodiments, the pre-set event may mean an event of a user input for a separate setting item for moving the floating UI 20 being received.

According to one or more embodiments, the pre-set event may be an event of pressing the floating UI 20 for a threshold time or more.

In some of the above-described embodiments, the motion data has been described as being transmitted to the electronic apparatus 100 only while touching the floating UI 20. A situation of the floating UI 20 being touched continuously and a situation of an event for moving the position of the floating UI 20 being identified may overlap. To solve the above-described problem, the terminal device 200 may perform an operation of checking whether the floating UI 20 is touched for a threshold time or more and an operation of checking a change value of the gyro data together.

In one or more examples, when the user input touching the floating UI for the first threshold time is received, the terminal device 200 may operate in the second mode.

In one or more examples, if the change value of the gyro data is within a threshold range (or less than or equal to a threshold value) while the user input touching the floating UI 20 for the second threshold time is being received, the terminal device 200 may identify that a pre-set event for moving the floating UI 20 has occurred. The terminal device 200 may perform (or operate) the mode for moving the floating UI 20. The second threshold time may be same or greater than the first threshold time.

If the user has an intent to move the pointer UI 10 by touching the floating UI 20, the change value of the motion data (or gyro data) sensed in the terminal device 200 may be great.

If the user has an intent to move the floating UI 20 by touching the floating UI 20, the change value of the motion data (or gyro data) sensed from the floating UI 20 may be small.

Referring to embodiment 2920, when the pre-set event for moving the floating UI 20 is identified, the terminal device 200 may perform the mode for moving the floating UI 20. The terminal device 200 may provide a UI for indicating a movable state of the floating UI 20. In one or more examples, the terminal device 200 may change a color of the touch input UI 506.

In embodiment 2910, the terminal device 200 may display the touch input UI 506 in the first color (or first background color).

In embodiment 2920, the terminal device 200 may display the touch input UI 506 in the second color (or second background color). The second color may be different from the first color.

If the second color and the first color are different, the user may easily recognize the movable state of the floating UI 20. In the movable state of the floating UI 20, the touch area other than the touch input UI 506 may be set as an unresponsive area.

A movable area of the floating UI 20 may be limited as the pre-set area. In embodiment 2920, the floating UI 20 may be moved only in an area corresponding to the touch input UI 506. This is to clearly determine which UI the user is selecting.

FIG. 30 is a diagram illustrating an operation for displaying the pointer UI 10 corresponding to an area of the terminal device 200 that the user touches according to one or more embodiments.

The terminal device 200 of FIG. 30 may correspond to the terminal device 200 of FIG. 17. Redundant descriptions thereof will be omitted. The full screen of the display of the terminal device 200 may include the pre-set first area 1710 and the pre-set second area 1720. The first area 1710 may be an area that receives the user input for transmitting touch data to the electronic apparatus 100. The second area 1720 may be an area that receives the user input for transmitting motion data to the electronic apparatus 100.

Referring to embodiment 3010 in FIG. 30, the terminal device 200 may receive the user input touching the first area 1710. The terminal device 200 may perform the first mode. The electronic apparatus 100 may display the pointer UI 10 in the first color (or first background color) while the terminal device 200 is performed in the first mode. When the touch data is received, the electronic apparatus 100 may display the pointer UI 10-1 in the first color.

Referring to embodiment 3020 in FIG. 30, the terminal device 200 may receive the user input touching the second area 1720. The terminal device 200 may perform the second mode. The electronic apparatus 100 may display the pointer UI 10 in the second color (or second background color) while the terminal device 200 is performed in the second mode. When the motion data is received, the electronic apparatus 100 may display the pointer UI 10-2 in the second color.

FIG. 31 is a diagram illustrating a user pattern for moving the pointer UI 10 according to one or more embodiments.

Referring to embodiment 3100 in FIG. 31, the electronic apparatus 100 may identify a touch pattern of the user. It may be assumed that the pointer UI 10 is moved from object A to object B. The drag signal in a right direction may be input to move from object A to object B. A drag input may be input excessively long due to a touch habit of the user. When the drag is input long, the user may have to input the drag in an opposite direction.

The terminal device 200 may receive a drag signal 3101 in a first direction and a drag signal 3102 in a second direction. The second direction may be in the opposite direction from the first direction.

The terminal device 200 may obtain touch data including the first drag signal 3101 and the second drag signal 3102. The terminal device 200 may transmit the touch data to the electronic apparatus 100.

The electronic apparatus 100 may obtain the first drag signal 3101 and the second drag signal 3102 based on the touch data. The electronic apparatus 100 may move the pointer UI 10 in a first direction 3111 based on the first drag signal 3101. The electronic apparatus 100 may move the pointer UI **1**0 in a second direction 3112 based on the second drag signal 3102.

When selecting object B from object A, the electronic apparatus 100 may identify a first pattern of the user of the terminal device 200 continuously inputting the drag signal in the opposite direction. The first pattern may not be limited to a situation of selecting object B. The first pattern may be identified in a situation of selecting a random object. The electronic apparatus 100 may identify a number of first patterns. If the number of first patterns is a threshold number, the electronic apparatus 100 may store the identified first pattern as the movement pattern information of the pointer UI 10.

The electronic apparatus 100 may provide the user having the first pattern with a function for adjusting the moving speed of the pointer UI 10. The electronic apparatus 100 may adjust the moving speed of the pointer UI 10 to prevent unnecessary drag signals 3102 from being input. The electronic apparatus 100 may reduce the moving speed of the pointer UI 10 at a specific position.

It may be assumed that the pointer UI 10 is moved from object A to object B. The electronic apparatus 100 may pre-store (or obtain) a position of object A 3121 and a position of object B 3122. Object A may be described as a first object. Object B may be described as a second object.

The electronic apparatus 100 may move the pointer UI 10 in the right direction (direction corresponding to the drag signal) at a first speed from the current position 3121 of the pointer UI 10.

If the pointer UI 10 is positioned within a threshold range from the position of object B 3122, the electronic apparatus 100 may move the pointer UI 10 in the right direction (direction corresponding to the drag signal) at a second speed from an initial position 3123 where the pointer UI 10 falls within the threshold range. The second speed may be less than the first speed.

When the moving speed of the pointer UI 10 becomes slow, a situation of the user having to input the drag signal 3102 in the opposite direction may reduce.

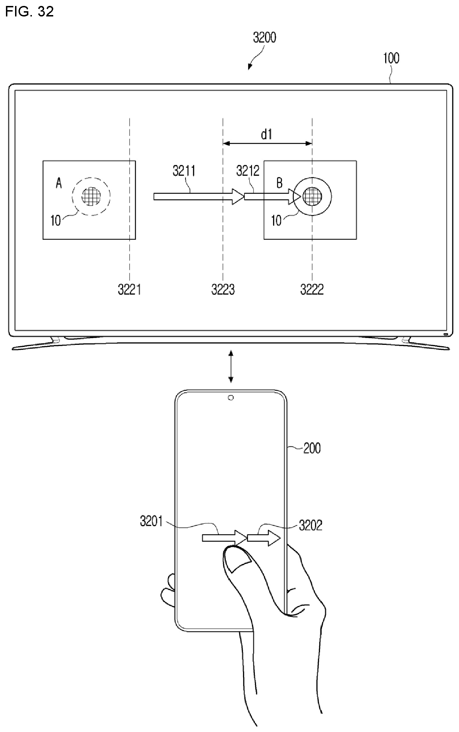

FIG. 32 is a diagram illustrating a user pattern for moving the pointer UI 10 according to one or more embodiments.

Referring to embodiment 3200 in FIG. 32, the electronic apparatus 100 may identify a touch pattern of the user. It may be assumed that the pointer UI 10 is moved from object A to object B. The drag signal in the right direction may be input to move from object A to object B. The drag input may be input excessively shortly according to the touch habit of the user. When the drag is input shortly, the user may additionally input the drag in the same direction.

The terminal device 200 may receive a first drag signal 3201 in a first direction and a second drag signal 3202 in a second direction. The second direction may be the same direction as the first direction. Accordingly, the second direction may be described as the first direction.

The terminal device 200 may obtain touch data that includes the first drag signal 3201 and the second drag signal 3202. The terminal device 200 may transmit the touch data to the electronic apparatus 100.

The electronic apparatus 100 may obtain the first drag signal 3201 and the second drag signal 3202 based on the touch data. The electronic apparatus 100 may move the pointer UI 10 in a first direction 3211 based on the first drag signal 3201. The electronic apparatus 100 may move the pointer UI 10 in a second direction 3212 based on the second drag signal 3202.

When selecting object B from object A, the electronic apparatus 100 may identify a second pattern of the user of the terminal device 200 continuously inputting the drag signal in the same direction. The second pattern may not be limited to a situation of selecting object B. The second pattern may be identified in a situation of selecting a random object. The electronic apparatus 100 may identify a number of second patterns. If the number of second patterns is a threshold number, the electronic apparatus 100 may store the identified second pattern as the movement pattern information of the pointer UI 10.

The electronic apparatus 100 may provide the user having the second pattern with a function for adjusting the moving speed of the pointer UI 10. The electronic apparatus 100 may adjust the moving speed of the pointer UI 10 to prevent unnecessary drag signals 3202 from being input. The electronic apparatus 100 may increase the moving speed of the pointer UI 10 at a specific position.

It may be assumed that the pointer UI 10 is moved from object A to object B. The electronic apparatus 100 may pre-store (or obtain) a position of object A 3221 and a position of object B 3222. Object A may be described as the first object. Object B may be described as the second object.

The electronic apparatus 100 may move the pointer UI 10 in the right direction (direction corresponding to the drag signal) at the first speed from the current position 3221 of the pointer UI 10.

If the pointer UI 10 is positioned within the threshold range from the position of object B 3222, the electronic apparatus 100 may move the pointer UI 10 in the right direction (direction corresponding to the drag signal) at the second speed from an initial position 3223 where the pointer UI 10 falls within the threshold range. The second speed may be greater than the first speed.

When the moving speed of the pointer UI 10 becomes slow, a situation of the user having to input the drag signal 3202 in the same direction may reduce.

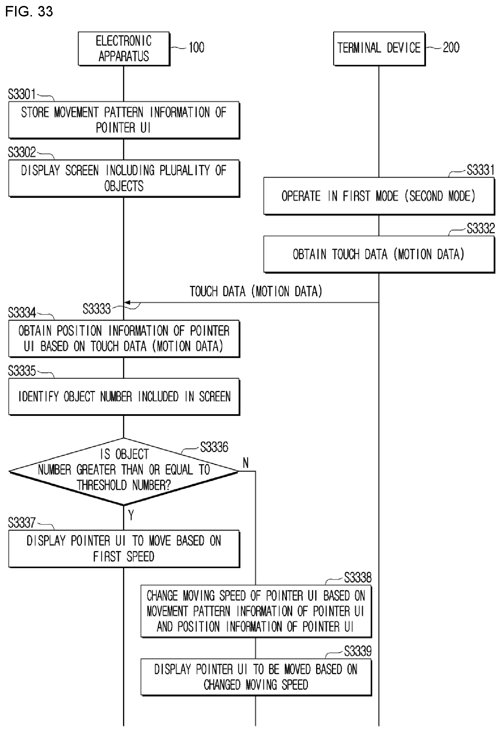

FIG. 33 is a diagram illustrating an operation for changing a moving speed of a pointer UI based on an object number according to one or more embodiments.

Referring to FIG. 33, the electronic apparatus 100 may store the movement pattern information of the pointer UI (S3301). The electronic apparatus 100 may display a screen including a plurality of objects (S3302).

The terminal device 200 may operate in the first mode (S3331). The terminal device 200 may obtain touch data (S3332). The terminal device 200 may transmit the touch data to the electronic apparatus 100 (S3333).

The electronic apparatus 100 may receive the touch data from the terminal device 200. The electronic apparatus 100 may obtain the position information of the pointer UI 10 based on the touch data (S3334). Step S3334 may correspond to step S1634 in FIG. 16. Redundant descriptions thereof will be omitted.

The electronic apparatus 100 may identify a number of objects included in the screen (S3335). The electronic apparatus 100 may identify whether the number of objects is greater than or equal to a threshold number (S3336).

If the number of objects is greater than or equal to the threshold number (S3336-Y), the electronic apparatus 100 may display the pointer UI 10 to move based on the first speed (S3337). The electronic apparatus 100 may fix the moving speed of the pointer UI 10 to the first speed. The first speed may be a basic speed.

The electronic apparatus 100 may change the moving speed of the pointer UI 10 based on the number of objects. If the object number is greater than or equal to the threshold number, the moving speed of the pointer UI may not be changed. This is because the user may experience inconvenience if change to the moving speed of the pointer UI 10 occurs frequently.

If the number of objects is less than the threshold number (S3336-N), the electronic apparatus 100 may change the moving speed of the pointer UI 10 based on the movement pattern information of the pointer UI 10 and the position information of the pointer UI 10 (S3338). The electronic apparatus 100 may display the pointer UI 10 to be moved based on the changed moving speed.

In one or more examples, the moving speed may be changed to the second speed which is less than the first speed. Descriptions associated therewith will be described in FIG. 31.

In one or more examples, the moving speed may be changed to a third speed which is greater than the first speed. Descriptions associated therewith will be described in FIG. 32. The third speed may correspond to the second speed in FIG. 32.

According to one or more embodiments, the change in the moving speed may be fixed(or standing). The electronic apparatus 100 may identify a pattern of the user based on the movement pattern information of the pointer UI 10. The electronic apparatus 100 may change an average moving speed of the pointer UI 10 based on the pattern of the user. The electronic apparatus 100 may move the pointer UI 10 based on the changed moving speed.

According to one or more embodiments, the change in moving speed may be variable based on the position of the object. Descriptions associated therewith will be described in FIG. 31 and FIG. 32.

According to one or more embodiments, the first mode described in FIG. 33 may be substituted with the second mode. Touch data may be substituted with motion data. This is because the pointer UI may be moved by not only the touch data, but also by the motion data.

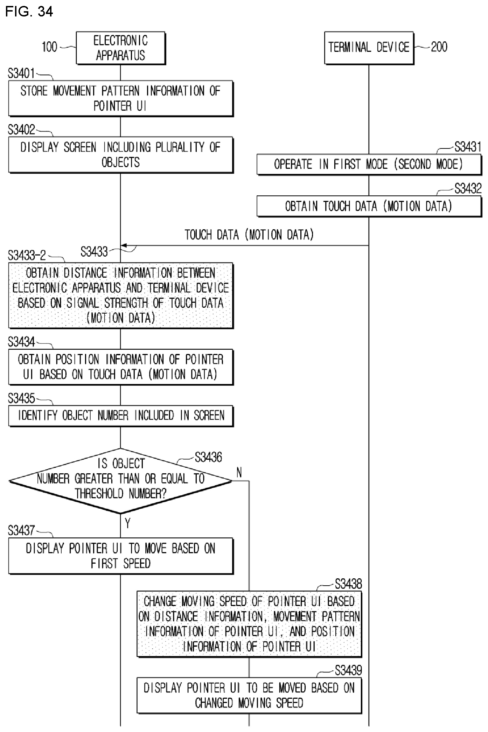

FIG. 34 is a diagram illustrating an operation for controlling a moving speed of a pointer UI based on a distance between the electronic apparatus 100 and the terminal device 200 according to one or more embodiments.

Operations S3401, S3402, S3431, S3432, S3433, S3434, S3435, S3436, S3437, and S3439 in FIG. 34 may correspond to operations S3301, S3302, S3331, S3332, S3333, S3333, S3335, S3336, S3337, and S3339 in FIG. 33. Redundant descriptions thereof will be omitted.

When the touch data is received from the terminal device 200, the electronic apparatus 100 may identify a strength of the signal that includes the touch data. The electronic apparatus 100 may obtain (or identify or calculate) distance information between the electronic apparatus 100 and the terminal device 200 based on the signal strength of the touch data (S3433-2).

The electronic apparatus 100 may perform operations S3434, S3435, S3436, and S3737.

If the number of objects is less than or equal to the threshold number (S3436-N), the electronic apparatus 100 may change the moving speed of the pointer UI 10 based on the distance information obtained from step S3433-2, the movement pattern information of the pointer UI 10, and the position information of the pointer UI 10 (S3438). The electronic apparatus 100 may display the pointer UI 10 to be moved based on the changed moving speed (S3439).

According to one or more embodiments, the first mode described in FIG. 34 may be substituted with the second mode. The touch data may be substituted with the motion data. This is because the pointer UI may be moved by not only the touch data, but also by the motion data.

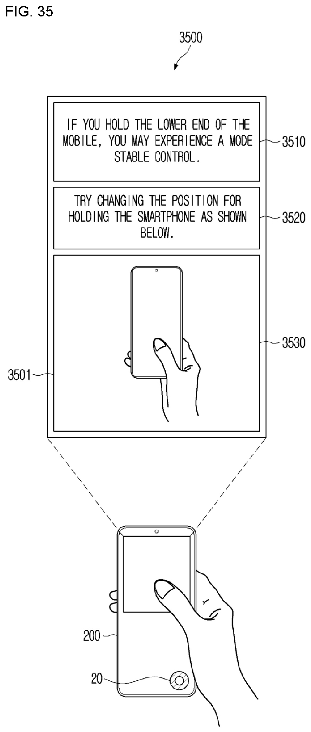

FIG. 35 is a diagram illustrating a grab method of the user according to one or more embodiments.

Referring to embodiment 3500 in FIG. 35, the terminal device 200 may obtain a grasp pose of the user of the terminal device 200 holding the terminal device 200. The terminal device 200 may store a pre-set grasp pose. The pre-set grasp pose may be described as a basic grasp pose. The grasp pose may be described as grasp pose information.

According to one or more embodiments, the basic grasp pose may be a pose that takes into consideration poses of average users. The basic grasp pose may be a pre-set pose.

According to one or more embodiments, the basic grasp pose may be an average pose in the terminal device 200. The terminal device 200 may obtain a grasp pose indicating in which pose the user is holding the terminal device 200 by analyzing the gyro data of the terminal device 200. When the grasp pose is obtained for a pre-set period (or number of times), the terminal device 200 may store an average grasp pose of the user as the basic grasp pose.

The terminal device 200 may compare the stored basic grasp pose with a current grasp pose. If the current grasp pose and the basic grasp pose are different, the terminal device 200 may display a guide screen 3501 associated with the grasp pose.

In one or more examples, the terminal device 200 may identify a grasp pose based on an average change value of the gyro data. The terminal device 200 may compare the grasp poses by comparing the basic average change value and the current average change value. The terminal device 200 may identify a difference between the basic average change value and the current average change value. If the difference is greater than or equal to the threshold value, the terminal device 200 may display a guide screen 3501.

The guide screen 3501 may include at least one of: a UI describing a reason for why a change in the grasp pose is needed 3510, a UI guiding the change in grasp pose 3520, or a UI indicating the basic grasp pose 3530.

The UI indicating the basic grasp pose 3530 may include a text or an image. Through the UI indicating the basic grasp pose 3530, the user may easily recognize a correct grasp pose.

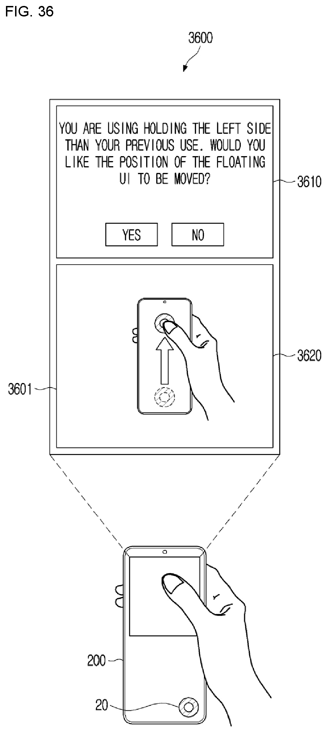

FIG. 36 is a diagram illustrating an operation for changing a position of the floating UI 20 according to one or more embodiments.

Embodiment 3600 in FIG. 36 may correspond to embodiment 3500 in FIG. 35 with respect to the grasp pose. Redundant descriptions thereof will be omitted.

The terminal device 200 may compare the stored basic grasp pose with the current grasp pose. If the current grasp pose and the basic grasp pose are different, the terminal device 200 may display a guide screen 3601 associated with the grasp pose.

The guide screen 3601 may include at least one of: a UI for guiding a position movement of the floating UI 20 3610 or a UI guiding a recommended position 3620.

The UI for guiding the position movement of the floating UI 20 3610 may include at least one of information indicating that the current grasp pose of the user is different from the basic grasp pose, or information guiding the position movement of the floating UI 20.

The UI guiding the recommended position 3620 may include a text or an image. Through the UI guiding the recommended position 3620, the user may easily recognize a position at which the floating UI 20 can be easily touched.

The terminal device 200 may store a touch history of the user. The terminal device 200 may obtain main use of hand information indicating whether the user is right-handed or left-handed based on the touch history of the user. The terminal device 200 may determine the recommended position based on the main use of hand information. The recommended positions for the right-handed and the left-handed may be different.

FIG. 37 is a diagram illustrating one or more embodiments of the terminal device 200 and a remote-control device being recognized simultaneously in the electronic apparatus 100 according to one or more embodiments.

Referring to embodiment 3700 in FIG. 37, the electronic apparatus 100 may be connected with a plurality of devices that can control the electronic apparatus 100. The plurality of devices may be the terminal device 200 and a remote-control device 300. The remote-control device 300 may be a dedicated control device corresponding to the electronic apparatus 100.

The electronic apparatus 100 may display pointer UIs 10 and 11 for each of the plurality of devices that are connected. The electronic apparatus 100 may display the pointer UI 10 corresponding to the terminal device 200. The electronic apparatus 100 may display a pointer UI 11 corresponding to the remote-control device 300. The pointer UI 10 may be described as a first pointer UI. The pointer UI 11 may be described as a second pointer UI.

The electronic apparatus 100 may display the pointer UI 10 in a first form (or a first shape).

The electronic apparatus 100 may display the pointer UI 11 in a second form (or a second shape). The second form may be different from the first form.

According to one or more embodiments, the electronic apparatus 100 may include identification information (user1, remote) indicating a subject of pointer UIs. The pointer UI 10 may include identification information (user1) indicating the terminal device 200. The identification information may be displayed in an image or a text. The pointer UI 11 may include identification information (remote) indicating the remote-control device 300.

According to one or more embodiments, when a plurality of devices is identified as connected, the electronic apparatus 100 may display only the pointer UI corresponding to one device according to a pre-set priority order.

In one or more examples, a highest priority order may be applied to the remote-control device 300 corresponding to the electronic apparatus 100.

In one or more examples, the highest priority order may be applied to the terminal device 200 registered in the electronic apparatus 100.

In one or more examples, the highest priority order may be applied to a device which was most recently connected to the electronic apparatus 100.

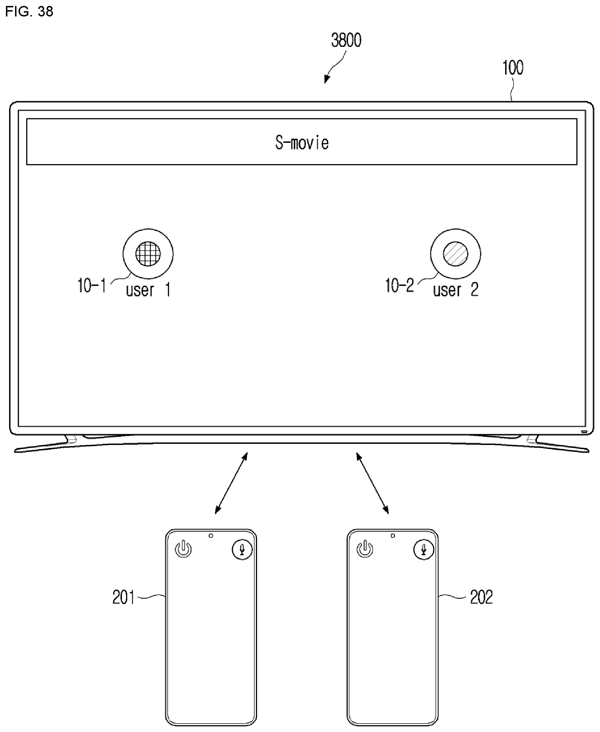

FIG. 38 is a diagram illustrating one or more embodiments of a plurality of terminal devices 201 and 202 being simultaneously recognized in the electronic apparatus 100 according to one or more embodiments.

Referring to embodiment 3800 in FIG. 38, the electronic apparatus 100 may be connected with a plurality of devices that can control the electronic apparatus 100. The plurality of devices may be a terminal device 201 and a terminal device 202. The terminal device 201 may be described as a first terminal device, and the terminal device 202 may be described as a second terminal device.

When the plurality of terminal devices 201 and 202 are identified as connected, the electronic apparatus 100 may display pointer UIs 10-1 and 10-2 for each of the plurality of terminal devices 201 and 202 that are connected. The electronic apparatus 100 may display the pointer UI 10-1 corresponding to the terminal device 201. The electronic apparatus 100 may display the pointer UI 10-2 corresponding to the terminal device 202. The pointer UI 10-1 may be described as the first pointer UI. The pointer UI 10-2 may be described as the second pointer UI.

The electronic apparatus 100 may display the pointer UI 10-1 in the first form (or first shape).

The electronic apparatus 100 may display the pointer UI 10-2 in the second form (or second shape). The second form may be different from the first form.

According to one or more embodiments, the electronic apparatus 100 may include identification information (user1, user2) indicating the subject of the pointer UIs. The pointer UI 10-1 may include identification information (user1) indicating the terminal device 201. The identification information may be displayed in an image or text. The pointer UI 10-2 may include identification information (user2) indicating the terminal device 202.

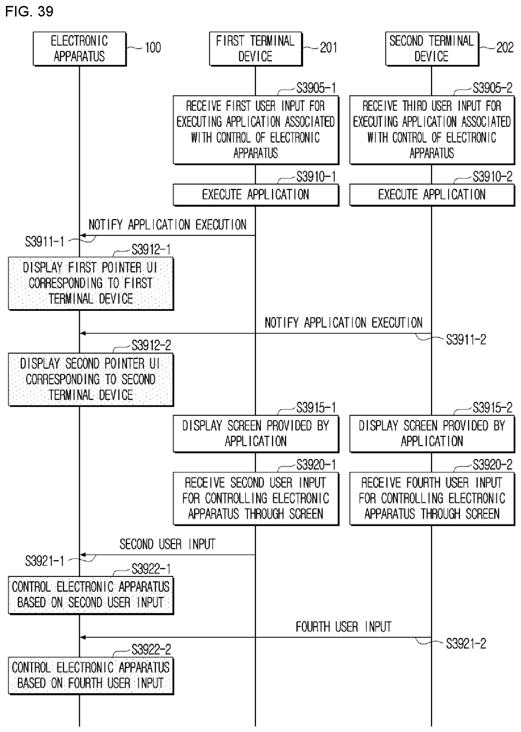

FIG. 39 is a diagram illustrating one or more embodiments of the plurality of terminal devices 201 and 202 being simultaneously recognized in the electronic apparatus 100 according to one or more embodiments.

Operations S3905-1, S3910-1, S3911-1, S3912-1, S3915-1, S3920-2, S3921-1, and S3922-1 in FIG. 39 may correspond to operations S805, S810, S811, S812, S815, S820-2, S821, and S822 in FIG. 8. Operations S3905-2, S3910-2, S3911-2, S3912-2, S3915-2, S3920-2, S3921-2, and S3922-2 in FIG. 39 may correspond to operations S805, S810, S811, S812, S815, S820-2, S821, and S822 in FIG. 8. Redundant descriptions thereof will be omitted.

The first terminal device 201 may receive a first user input for executing an application associated with the electronic apparatus 100 (S3905-1). When the first user input is received, the first terminal device 201 may execute the application (S3910-1). The first terminal device 201 may transmit an execution notification of the application to the electronic apparatus 100 (S3911-1).

The electronic apparatus 100 may receive the execution notification of the application from the first terminal device 201. The electronic apparatus 100 may display the first pointer UI 10-1 corresponding to the first terminal device 201.

The first terminal device 201 may display a screen providing the application (S3915-1). The first terminal device 201 may receive the second user input for controlling the electronic apparatus 100 through the screen (S3920-1). The first terminal device 201 may transmit the second user input to the electronic apparatus 100 (S3921-1).

The electronic apparatus 100 may receive the second user input from the first terminal device 201. The electronic apparatus 100 may control the electronic apparatus 100 based on the second user input (S3922-1).

The second terminal device 202 may receive a third user input for executing an application associated with the electronic apparatus 100 (S3905-2). When the third user input is received, the second terminal device 202 may execute the application (S3910-2). The second terminal device 202 may transmit an execution notification of the application to the electronic apparatus 100 (S3911-2).

The electronic apparatus 100 may receive the execution notification of the application from the second terminal device 202. The electronic apparatus 100 may display the first pointer UI 10-2 corresponding to the second terminal device 202.

The second terminal device 202 may display a screen provided by the application (S3915-2). The second terminal device 202 may receive a fourth user input for controlling the electronic apparatus 100 through the screen (S3920-2). The second terminal device 202 may transmit the fourth user input to the electronic apparatus 100 (S3921-2).

The electronic apparatus 100 may receive the fourth user input from the second terminal device 202. The electronic apparatus 100 may control the electronic apparatus 100 based on the fourth user input (S3922-2).

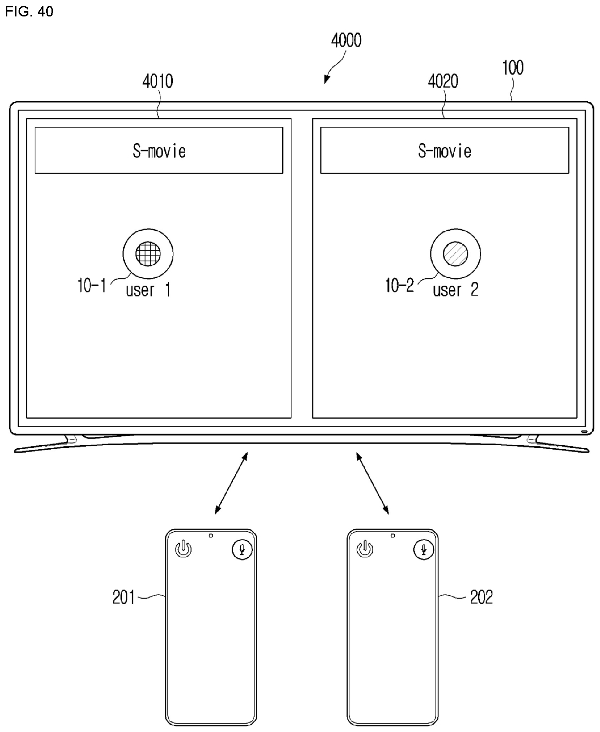

FIG. 40 is a diagram illustrating an operation for displaying the pointer UIs 10-1 and 10-2 differently based on the terminal devices 201 and 202 according to one or more embodiments.

Referring to embodiment 4000 in FIG. 40, the electronic apparatus 100 may be connected with a plurality of devices that can control the electronic apparatus 100. The plurality of devices may be the terminal device 201 and the terminal device 202. The terminal device 201 may be described as the first terminal device, and the terminal device 202 may be described as the second terminal device.

If the plurality of terminal devices 201 and 202 is identified as connected, the electronic apparatus 100 may display separate screens 4010 and 4020 corresponding to each of the plurality of terminal devices 201 and 202.

The electronic apparatus 100 may display the pointer UIs 10-1 and 10-2 for each of the plurality of terminal devices 201 and 202 that are connected in separately divided screens. The electronic apparatus 100 may display the pointer UI 10-1 corresponding to the terminal device 201 in a first screen 4010 corresponding to the first terminal device 201. The electronic apparatus 100 may display the pointer UI 10-2 corresponding to the terminal device 202 in a second screen 4020 corresponding to the second terminal device 202. The pointer UI 10-1 may be described as the first pointer UI. The pointer UI 10-2 may be described as the second pointer UI.

The description of content included in the first screen 4010 and the second screen 4020 may be the same. A difference between the first screen 4010 and the second screen 4020 may be the position of the pointer UI and the form of the pointer UI.

The electronic apparatus 100 may display the pointer UI 10-1 in the first form (or first shape).

The electronic apparatus 100 may display the pointer UI 10-2 in the second form (or second shape). The second form may be different from the first form.

According to one or more embodiments, the electronic apparatus 100 may include identification information (user1, user2) indicating the subject of the pointer UIs. The pointer UI 10-1 may include identification information (user1) indicating the terminal device 201. The identification information may be displayed as an image or a text. The pointer UI 10-2 may include identification information (user2) indicating the terminal device 202.

FIG. 41 is a diagram illustrating an operation in which the electronic apparatus 100 receives touch data and motion data from the terminal device 200.

Referring to FIG. 41, the terminal device 200 may obtain the touch data and the motion data (S4105). The terminal device 200 may transmit the touch data and the motion data to the electronic apparatus 100 (S4110).

The electronic apparatus 100 may receive the touch data and the motion data from the terminal device 200. The electronic apparatus 100 may determine whether the pre-set event is identified based on at least one of the touch data or the motion data (S4115).

A pre-set event associated with transmission of the motion data may include at least one of touching the pre-set area, touching the floating UI, touching a random area for a threshold time or more, touching (pressing) the physical button, or touching the pre-set UI.

With respect to the event of touching the physical button, the touch data may include operation data of the terminal device 200. The operation data may include data associated with an input of the physical button of the terminal device 200.

If the pre-set event is not identified (S4115-N), the electronic apparatus 100 may perform a function corresponding to the touch data (S4120). The function corresponding to the touch data has been described in FIG. 12.

In one or more examples, the electronic apparatus 100 may obtain the position information of the pointer UI 10 based on the touch data (S4121). The electronic apparatus 100 may display the pointer UI 10 based on the position information (S4122). Operations S4121 and S4122 may correspond to operations S1634 and S1635 in FIG. 16. Redundant descriptions thereof will be omitted.

If the pre-set event is identified (S4115-Y), the electronic apparatus 100 may obtain the position information of the pointer UI 10 based on the motion data (S4125) The electronic apparatus 100 may display the pointer UI 10 based on the position information (S4130). Operations S4125 and S4130 may correspond to operations S1844 and S1845 in FIG. 18. Redundant descriptions thereof will be omitted.

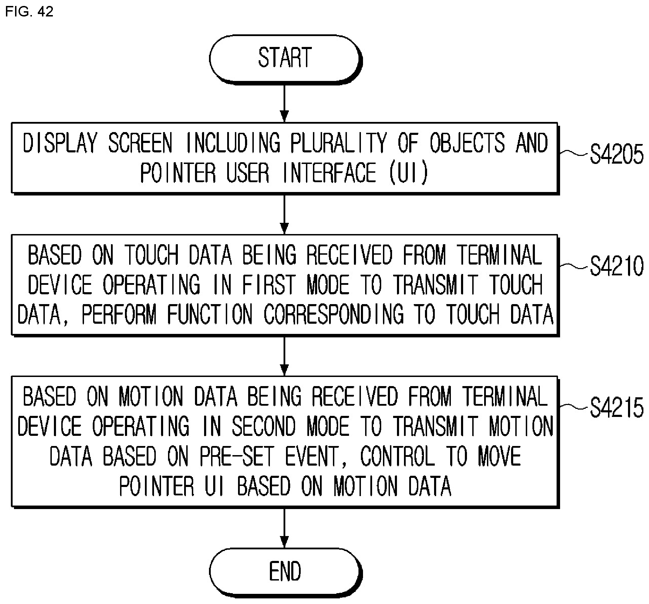

FIG. 42 is a diagram illustrating a controlling method of the electronic apparatus 100 according to one or more embodiments.

Referring to FIG. 42, a controlling method of the electronic apparatus that connects with the terminal device may include displaying a screen including a plurality of objects and the pointer user interface (UI) (S4205). The method may further comprise receiving, via the communication interface 130, touch data from the terminal device operating in a first mode or motion data from the terminal device operating in a second mode. The method may further comprise performing, based on touch data being received from the terminal device operating in the first mode to transmit the touch data, a function corresponding to the touch data (S4210), and controlling, based on motion data being received from the terminal device operating in the second mode to transmit the motion data based on the pre-set event, the pointer UI to move based on the motion data (S4215).

The controlling method may include displaying the pointer UI based on the notification indicating that the application for controlling the electronic apparatus has been executed is received from the terminal device.

The function corresponding to the touch data may include at least one of moving the pointer UI, selecting the object corresponding to the position at which the pointer UI is displayed of the plurality of objects, displaying the home screen, displaying the previous screen, or scrolling the current screen.

The touch data may include at least one of the drag signal, the tap signal, the long tap signal, the double tap signal, or the edge scroll signal.

The pre-set event may include at least one of the pre-set area being touched from among the whole area of the display of the terminal device, the floating UI displayed on the display of the terminal device being touched, the random area being touched for the threshold time or more from among the whole area of the display of the terminal device, the pre-set physical button of the terminal device being touched, or the pre-set UI displayed on the display of the terminal device being touched.

The performing a function corresponding to the touch data (S4210) may include performing, based on the touch data including the user input received through the first area of the whole area of the display of the terminal device being received, the function corresponding to the touch data, and the controlling the pointer UI to move based on the motion data (S4215) may include controlling, based on the motion data being received based on the user input received through the second area of the whole area of the display of the terminal device, the pointer UI to move based on the motion data.

The controlling the pointer UI to move based on the motion data (S4215) may include controlling, based on receiving the motion data obtained while the user input for selecting the floating UI displayed on the display of the terminal device is received, the pointer UI to move based on the motion data.

The motion data may include the gyro data obtained through the gyro sensor included in the terminal device.

The controlling method may include adjusting the moving speed of the pointer UI based on the movement pattern information of the pointer UI stored in the electronic apparatus, and the movement pattern information of the pointer UI may include information indicating a pattern by which the pointer UI is moved to select an object.

The controlling method may include displaying the identification information corresponding to the terminal device together with the pointer UI.

Embodiments of the method and device described herein improve the functioning of a computer by enabling control of the electronic device with a display via a terminal device using touch input. These problems of enabling control of the electronic device with a display via a terminal device using touch input are present in the realm of computation and networks. Thus, embodiments herein are rooted in computer technology to overcome a problem arising in the realm of computer networks.

The methods according to the various embodiments of the disclosure described above may be implemented in an application form installable in an electronic apparatus of the related art.

The methods according to the various embodiments of the disclosure described above may be implemented with only a software upgrade, or a hardware upgrade of the electronic apparatus of the related art.

The above-described various embodiments of the disclosure may be performed through an embedded server provided in the electronic apparatus, or at least one external server from the electronic or the display apparatus.

According to one or more embodiments of the disclosure, the various embodiments described above may be implemented with software including instructions stored in a machine-readable storage media (e.g., computer). The machine may call a stored instruction from a storage medium, and as a device operable according to the called instruction, may include an electronic apparatus according to the above-mentioned embodiments. Based on a command being executed by the processor, the processor may directly or using other elements under the control of the processor perform a function corresponding to the command. The command may include a code generated by a compiler or executed by an interpreter. A machine-readable storage medium may be provided in a form of a non-transitory storage medium. Herein, 'non-transitory' merely means that the storage medium is tangible and does not include a signal, and the term does not differentiate data being semi-permanently stored or being temporarily stored in the storage medium.

According to one or more embodiments of the disclosure, a method according to the various embodiments described above may be provided included a computer program product. The computer program product may be exchanged between a seller and a purchaser as a commodity. The computer program product may be distributed in a form of the machine-readable storage medium (e.g., a compact disc read only memory (CD-ROM)), or distributed online through an application store. In the case of online distribution, at least a portion of the computer program product may be stored at least temporarily in the storage medium such as a server of a manufacturer, a server of an application store, or a memory of a relay server, or temporarily generated.

Each of the elements (e.g., a module or a program) according to the various embodiments described above may be formed as a single entity or a plurality of entities, and a portion of sub-elements of the above-mentioned sub-elements may be omitted, or other sub-elements may be further included in the various embodiments. Alternatively or additionally, a portion of the elements (e.g., modules or programs) may be integrated into one entity to perform the same or similar functions performed by each of the relevant elements prior to integration. Operations performed by a module, a program, or another element, in accordance with various embodiments, may be executed sequentially, in a parallel, repetitively, or in a heuristic manner, or at least a portion of the operations may be executed in a different order, omitted or a different operation may be added.

In the above, while the disclosure has been illustrated and described with reference to example embodiments thereof, it will be understood that the various example embodiments are intended to be illustrative, not limiting. It will be understood by those skilled in the art that various changes in form and details may be made therein without departing from the true spirit and full scope of the disclosure, including the appended claims and their equivalents.

## Claims

1. An electronic apparatus, comprising:
memory that stores instructions;
a communication interface configured to connect with a terminal device;
a display; and
at least one processor comprising processing circuitry, wherein the instructions, when executed individually or collectively by the at least one processor, cause the electronic apparatus to:
control the display to display a screen comprising a plurality of objects and a pointer user interface (UI);
receive, via the communication interface, touch data from the terminal device operating in a first mode or motion data from the terminal device operating in a second mode;
based on the touch data being received, perform a function corresponding to the touch data; and
based on the motion data being received, control the display to move the pointer UI based on the motion data,
wherein the terminal device operates in the second mode based on a pre-set event.

2. The electronic apparatus of claim 1, wherein the instructions, when executed individually or collectively by the at least one processor, further cause the electronic apparatus to:
receive a notification from the terminal device via the communication interface, the notification indicating that an application for controlling the electronic apparatus has been executed; and
based on the notification being received, control the display to display the pointer UI.

3. The electronic apparatus of claim 1, wherein
the function corresponding to the touch data comprises at least one of: moving the pointer UI, selecting an object corresponding to a position at which the pointer UI is displayed from the plurality of objects, displaying a home screen, displaying a previous screen, or scrolling a current screen.

4. The electronic apparatus of claim 3, wherein
the touch data comprises at least one of: a drag signal, a tap signal a long tap signal, a double tap signal, or an edge scroll signal.

5. The electronic apparatus of claim 1, wherein
the pre-set event comprises at least one of: a pre-set area of a display of the terminal device being touched, a floating UI displayed on the display of the terminal device being touched, an area of the display of the terminal device being touched for a threshold time or more, a pre-set physical button of the terminal device being touched, or a pre-set UI displayed on the display of the terminal device being touched.

6. The electronic apparatus of claim 1, wherein the instructions, when executed individually or collectively by the at least one processor, further cause the electronic apparatus to:
based on receiving the touch data comprising a user input received through a first area of a display of the terminal device, perform a function corresponding to the touch data; and
based on the motion data being received based on a user input received through a second area of the display of the terminal device, control the display for the pointer UI to move based on the motion data.

7. The electronic apparatus of claim 1, wherein the instructions, when executed individually or collectively by the at least one processor, further cause the electronic apparatus to:
based on receiving the motion data obtained while a user input for selecting a floating UI displayed on the display of the terminal device is received, control the display for the pointer UI to move based on the motion data.

8. The electronic apparatus of claim 1, wherein
the motion data comprises gyroscope data obtained through a gyroscope sensor in the terminal device or acceleration data obtained through an acceleration sensor in the terminal device.

9. The electronic apparatus of claim 1, wherein the instructions, when executed individually or collectively by the at least one processor, further cause the electronic apparatus to:
adjust a moving speed of the pointer UI based on movement pattern information of the pointer UI stored in the memory,
wherein the movement pattern information of the pointer UI comprises information indicating a pattern by which the pointer UI is moved to select an object.

10. The electronic apparatus of claim 1, wherein the instructions, when executed individually or collectively by the at least one processor, further cause the electronic apparatus to:
control the display to display identification information corresponding to the terminal device together with the pointer UI.

11. A method of controlling an electronic apparatus connected with a terminal device, the method comprising:
displaying a screen comprising a plurality of objects and a pointer user interface (UI);
receiving touch data from the terminal device operating in a first mode or motion data from the terminal device operating in a second mode;
based on the touch data being received, performing a function corresponding to the touch data; and
based on the motion data being received, controlling the pointer UI to move based on the motion data,
wherein the terminal device operates in the second mode based on a pre-set event.

12. The method of claim 11, further comprising:
receiving a notification from the terminal device, the notification indicating that an application for controlling the electronic apparatus has been executed; and
based on the notification being received, displaying the pointer UI.

13. The method of claim 11, wherein
the function corresponding to the touch data comprises at least one of: moving the pointer UI, selecting an object corresponding to a position at which the pointer UI is displayed from the plurality of objects, displaying a home screen, displaying a previous screen, or scrolling a current screen.

14. The method of claim 13, wherein
the touch data comprises at least one of: a drag signal, a tap signal a long tap signal, a double tap signal, or an edge scroll signal.

15. The method of claim 11, wherein
the pre-set event comprises at least one of: a pre-set area of a display of the terminal device being touched, a floating UI displayed on the display of the terminal device being touched, an area of the display of the terminal device being touched for a threshold time or more, a pre-set physical button of the terminal device being touched, or a pre-set UI displayed on the display of the terminal device being touched.
